# EUROPEAN PATENT SPECIFICATION

(11) **EP 4 304 028 B1**
(45) Date of publication and mention of the grant of the patent: **09.04.2025**
(21) Application number: 22763049.8
(22) Date of filing: 22.02.2022
(51) Int. Cl.: B29C 61/02, H02G 1/14, H01R 4/72, H01R 43/00, B29K 105/02, B29L 23/00

(54) **HEAT-SHRINKABLE TUBE HEATING DEVICE**
WÄRMESCHRUMPFBARE ROHRHEIZVORRICHTUNG
DISPOSITIF DE CHAUFFAGE DE TUBE THERMORÉTRACTABLE

(30) Priority: 02.03.2021 JP 2021032363
(43) Date of publication of application: 10.01.2024
(73) Proprietor: ShinMaywa Industries, Ltd., Takarazuka-shi, Hyogo 665-8550 (JP)
(72) Inventor: SHIMMURA Ayako, Takarazuka-shi, Hyogo 665-8550 (JP); TAKAHASHI Yoshiki, Takarazuka-shi, Hyogo 665-8550 (JP)
(74) Representative: Grünecker Patent- und Rechtsanwälte PartG mbB
(86) International application number: PCT/JP2022/007160
(87) International publication number: WO 2022/185993

(56) References cited:
- CN-A- 110 789 114
- CN-U- 208 841 889
- DE-U1- 29 908 740
- GB-A- 1 128 878
- JP-A- H04 304 108
- JP-A- S5 131 779
- JP-A- S5 315 581
- JP-A- S59 185 622
- JP-A- S59 185 622
- JP-A- S6 392 209
- JP-A- S6 392 209
- JP-U- S4 961 751
- JP-U- S5 948 816
- JP-U- S59 186 988
- KR-B1- 101 739 841

## Description

### Technical Field

The present invention relates to a thermally shrinkable tube heating apparatus.

### Background Art

Thermally shrinkable tubes that are shrunk by being heated and heating apparatuses for such thermally shrinkable tubes are conventionally known. Such a thermally shrinkable tube is used to, for example, bind a bundle of uncovered wires. In such a case, the bundle of uncovered wires is inserted into the thermally shrinkable tube, and the thermally shrinkable tube is heated to be shrunk. As a result, the wires are constrained from outside and are bound as one body. For example, Patent Literature 1 discloses a heating apparatus that puts a connector including a thermally shrinkable tube into a box-like heating unit having a built-in heater and heats the heating unit, and then cools the heating unit. Patent Literature 2 to Patent Literature 5 provide further thermally shrinkable tube heating apparatuses according to the prior art.

### Citation List

### Patent Literature

Patent Literature 1: Japanese Laid-Open Patent Publication No. Hei 8-185953
Patent Literature 2: JP S63 92209 A
Patent Literature 3: JP S51 31779 A
Patent Literature 4: JP S59 185622 A
Patent Literature 5: GB 1 128 878 A

### Summary of Invention

### Technical Problem

A general method for manually heating a thermally shrinkable tube is to blow hot air from a heat gun or the like to the thermally shrinkable tube. Such a method of causing the hot air to hit the thermally shrinkable tube allows the thermally shrinkable tube to be heated more quickly than the method of heating a main body of the heating unit and heating the thermally shrinkable tube by the heat of the main body as described in Patent Literature 1. The method of heating the thermally shrinkable tube via the main body of the heating unit requires some time to heat the main body, and therefore, it is difficult to shorten the time required to heat the thermally shrinkable tube.

In order to realize a thermally shrinkable tube heating apparatus that automatically blows hot air to the thermally shrinkable tube, a holding member that holds a work including the thermally shrinkable tube is needed. However, when this method was actually tried, it was found out to be difficult to heat and shrink the thermally shrinkable tube in a short time because of an influence of the holding member. This will be described in more detail. For example, when a large part of the thermally shrinkable tube was held by the holding member, the hot air was blocked by the holding member and was not easily blown to the thermally shrinkable tube, and therefore, it took time to heat and shrink the thermally shrinkable tube. By contrast, when a smaller part of the thermally shrinkable tube was held by the holding member, the thermally shrinkable tube was moved by the hot air, and therefore, the thermally shrinkable tube was not heated and shrunk in a preferred manner.

The present invention, made in light of such a point, has an object of providing a thermally shrinkable tube heating apparatus capable of heating and shrinking the thermally shrinkable tube more quickly.

### Solution to Problem

A thermally shrinkable tube heating apparatus according to the present invention includes a holding member including an accommodation space capable of accommodating a thermally shrinkable tube; and a hot air generation device generating hot air. The holding member includes a wall, an inlet flow path, and a discharge flow path. The wall is provided around a predetermined axis, extends in an axial direction of the axis, and forms the accommodation space inner thereto. The inlet flow path includes a supply opening opened to an outer surface of the holding member and an inlet opening opened to the wall. The discharge flow path includes an outlet opening opened to the wall and a discharge opening opened to the outer surface of the holding member. The hot air generation device sends the hot air into the supply opening.

With the above-described thermally shrinkable tube heating apparatus, the accommodation space in which the thermally shrinkable tube is to be accommodated is provided in the holding member, and this structure suppresses the thermally shrinkable tube from being moved by the hot air. The hot air supplied to the supply opening flows into the accommodation space, and then passes through the discharge flow path and is discharged to the outside of the holding member. As a result of the hot air being discharged from the accommodation space, hot air having a high temperature generated by the hot air generation device is continuously sent into the accommodation space while the thermally shrinkable tube is heated. Therefore, the thermally shrinkable tube is heated and shrunk quickly. The present inventors have found out that unless a discharge flow path in communication with the accommodation space is provided to discharge the hot air from the discharge flow path, new hot air having a high temperature does not easily flow into the accommodation space, and therefore, the heating efficiency is not improved. The above-described thermally shrinkable tube heating apparatus is structured based on such knowledge. Therefore, the above-described thermally shrinkable tube heating apparatus heats and shrinks the thermally shrinkable tube more quickly.

According to the present invention, the holding member includes a plurality of clamp members each including a part of the wall. The thermally shrinkable tube heating apparatus further includes a driving device. The driving device drives the plurality of clamp members in a radial direction of the accommodation space to cause the plurality of clamp members to grasp or release the thermally shrinkable tube accommodated in the accommodation space. According to a preferred embodiment, the thermally shrinkable tube heating apparatus further includes a moving device and a control device. The moving device moves at least one of an electric wire to be inserted into the thermally shrinkable tube and the holding member in the axial direction to insert the electric wire into the thermally shrinkable tube accommodated in the accommodation space. The control device controls the hot air generation device, the driving device and the moving device. The control device is configured to control the driving device to cause the plurality of clamp members to grasp the thermally shrinkable tube and to control the moving device to insert the electric wire into the thermally shrinkable tube in the state where the plurality of clamp members grasp the thermally shrinkable tube; and to control, after the electric wire is inserted into the thermally shrinkable tube, the driving device to cause the plurality of clamp members to release the thermally shrinkable tube and further to control the hot air generation device to send the hot air into the supply opening.

In order to insert the electric wire into the thermally shrinkable tube, it is preferred to grasp the thermally shrinkable tube such that the thermally shrinkable tube is not moved by the insertion work. However, when the thermally shrinkable tube is grasped by the plurality of clamp members forming the accommodation space, the wall of the plurality of clamp members and an outer circumferential surface of the thermally shrinkable tube contact each other. This makes it difficult for the hot air to flow along the outer circumferential surface of the thermally shrinkable tube. In such a situation, the above-described thermally shrinkable tube heating apparatus causes the thermally shrinkable tube to be released while the hot air is sent to the supply opening, so that the hot air easily flows along the outer circumferential surface of the thermally shrinkable tube. Therefore, the thermally shrinkable tube is heated and shrunk more quickly.

According to a preferred embodiment of the above-described thermally shrinkable tube heating apparatus, the plurality of clamp members are, in at least the state of releasing the thermally shrinkable tube, separated from each other to form a gap. The gap forms at least one of the inlet flow path and the discharge flow path.

With the above-described thermally shrinkable tube heating apparatus, the gap formed by the plurality of clamp members being separated from each other is used as at least one of the inlet flow path and the discharge flow path. Therefore, the structure of the holding member is simplified.

According to a preferred embodiment of the thermally shrinkable tube heating apparatus of the present invention, the hot air generation device includes an hot air outlet, through which the hot air is blown out. The thermally shrinkable tube heating apparatus further includes a cool air generation device including a cool air outlet, through which cool air is blown out, and a switch device capable of moving at least one of the hot air generation device, the cool air generation device and the holding member to cause the hot air outlet or the cool air outlet to face the supply opening.

In order to appropriately control the heating of a next thermally shrinkable tube, it is preferred that the temperature of the accommodation space is lowered after the heating of the previous thermally shrinkable tube is finished but before the next thermally shrinkable tube is accommodated in the accommodation space. With the above-described thermally shrinkable tube heating apparatus, the cool air generated by the cool air generation device is sent into the accommodation space from the supply opening, and as a result, the accommodation space is cooled quickly. At this time, the cool air is discharged from the discharge flow path, and as a result, the cool air generated by the cool air generation device is continuously supplied into the accommodation space. Therefore, the accommodation space is cooled more quickly.

According to a preferred embodiment of the thermally shrinkable tube heating apparatus of the present invention, the thermally shrinkable tube heating apparatus further includes a cool air generation device generating cool air. The holding member includes a second inlet flow path including a second supply opening opened to the outer surface of the holding member and a second inlet opening opened to the wall. The cool air generation device sends the cool air into the second supply opening.

The above-described thermally shrinkable tube heating apparatus also cools the accommodation space quickly.

According to a preferred embodiment of the thermally shrinkable tube heating apparatus of the present invention, the inlet opening is a flat opening extending in the axial direction.

With the above-described thermally shrinkable tube heating apparatus, the hot air is sent into the accommodation space in a wide range in the axial direction of the accommodation space from the inlet opening extending in the axial direction. As a result, the hot air is allowed to hit a wide range of the thermally shrinkable tube at the same time. Therefore, the thermally shrinkable tube is heated highly efficiently and uniformly.

According to a preferred embodiment of the thermally shrinkable tube heating apparatus of the present invention, the outlet opening and the discharge opening are each a flat opening extending in the axial direction, and the discharge flow path is a flat flow path extending in the axial direction.

With the above-described thermally shrinkable tube heating apparatus, the hot air is discharged efficiently along the axial direction of the accommodation space. Therefore, the thermally shrinkable tube is heated more efficiently.

According to a preferred embodiment of the above-described thermally shrinkable tube heating apparatus, the holding member includes a plurality of discharge holes each running therethrough from the outer surface of the holding member to the discharge flow path. The plurality of discharge holes are aligned in the axial direction.

With the above-described thermally shrinkable tube heating apparatus, the hot air is discharged more efficiently by the plurality of discharge holes assisting the discharge of the hot air. In addition, the plurality of discharge holes are aligned in the axial direction, which is a longitudinal direction of the discharge flow path. Therefore, the space efficiency is high.

According to a preferred embodiment of the thermally shrinkable tube heating apparatus of the present invention, as seen in the axial direction, an opening direction of the inlet opening and an opening direction of the outlet opening are shifted from each other by at least 90 degrees.

With the above-described thermally shrinkable tube heating apparatus, the hot air supplied into the accommodation space rotates by at least 90 degrees along the outer circumferential surface of the thermally shrinkable tube before flowing out from the outlet opening. Therefore, the thermally shrinkable tube is heated uniformly and quickly.

According to a preferred embodiment of the above-described thermally shrinkable tube heating apparatus, the holding member includes a second discharge flow path including a second outlet opening provided symmetrically to the outlet opening with respect to the opening direction of the inlet opening and a second discharge opening opened to the outer surface of the holding member.

With the above-described thermally shrinkable tube heating apparatus, the hot air supplied into the accommodation space rotates by at least 180 degrees along the outer circumferential surface of the thermally shrinkable tube before being discharged from the outlet opening and the second outlet opening. Therefore, the thermally shrinkable tube is heated uniformly and quickly. Particularly, the hot air rotates substantially uniformly to the side of the outlet opening and to the side of the second outlet opening of the thermally shrinkable tube. This allows the thermally shrinkable tube to be heated more uniformly.

According to a preferred embodiment of the thermally shrinkable tube heating apparatus of the present invention, the thermally shrinkable tube heating apparatus further includes an insertion member to be inserted into the accommodation space so as to partition the inlet opening and the outlet opening from each other, and an insertion member driving device inserting the insertion member into the accommodation space to put the insertion member into contact with the thermally shrinkable tube accommodated in the accommodation space, or retracting the insertion member from the accommodation space. The insertion member includes a cutout or a through-hole causing an area on the side of the inlet opening with respect to the insertion member and an area on the side of the outlet opening with respect to the insertion member to communicate with each other.

With the above-described thermally shrinkable tube heating apparatus, the thermally shrinkable tube in the accommodation space is held at a predetermined position by the insertion member contacting the thermally shrinkable tube when the insertion member is inserted into the accommodation space, and a flow path allowing the inlet opening and the outlet opening to communicate with each other is formed by the cutout or the through-hole in the insertion member. Therefore, the thermally shrinkable tube is held at a predetermined position in the accommodation space, and in addition, the hot air is allowed to flow in the accommodation space. Thus, the heating efficiency of the thermally shrinkable tube is improved.

### Advantageous Effects of Invention

A thermally shrinkable tube heating apparatus according to the present invention is capable of heating and shrinking a thermally shrinkable tube more quickly.

### Brief Description of Drawings

FIG. 1 is a perspective view of a thermally shrinkable tube heating apparatus according to an embodiment.
FIG. 2 is a vertical cross-sectional view of the thermally shrinkable tube heating apparatus.
FIG. 3 is a perspective view of a tube holding device.
FIG. 4 is a vertical cross-sectional view of a main part of the tube holding device, showing a state where the tube holding device grasps the thermally shrinkable tube.
FIG. 5 is a vertical cross-sectional view of the main part of the tube holding device, showing a state where the tube holding device releases the thermally shrinkable tube.
FIG. 6 is a cross-sectional view of a hot air generation device as seen from the rear thereof.
FIG. 7 is a vertical cross-sectional view of the thermally shrinkable tube heating apparatus in a state where the tube holding device is at a heating position.
FIG. 8 is a block diagram of the thermally shrinkable tube heating apparatus.
FIG. 9 is a vertical cross-sectional view of a holding portion according to a first modification.
FIG. 10A is a vertical cross-sectional view showing a shape of clamps according to a second modification, in a state where the clamps are closed.
FIG. 10B is a vertical cross-sectional view showing the shape of the clamps according to the second modification, in a state where the clamps are opened.
FIG. 11A is a vertical cross-sectional view showing a shape of clamps according to a third modification, in a state where the clamps are closed.
FIG. 11B is a vertical cross-sectional view showing the shape of the clamps according to the third modification, in a state where the clamps are opened.
FIG. 12A is a vertical cross-sectional view showing a state where a holding portion according to a fourth modification releases the thermally shrinkable tube.
FIG. 12B is a vertical cross-sectional view showing a state where the holding portion according to the fourth modification grasps the thermally shrinkable tube.
FIG. 13 is a perspective view of the holding portion according to the fourth modification.

### Description of Embodiments

### [Structure of the thermally shrinkable tube heating apparatus]

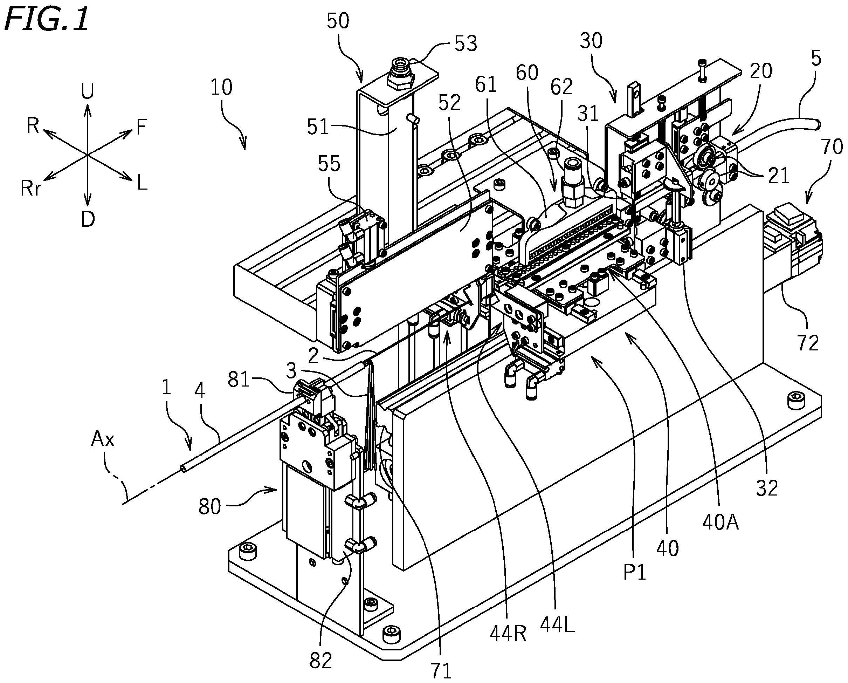

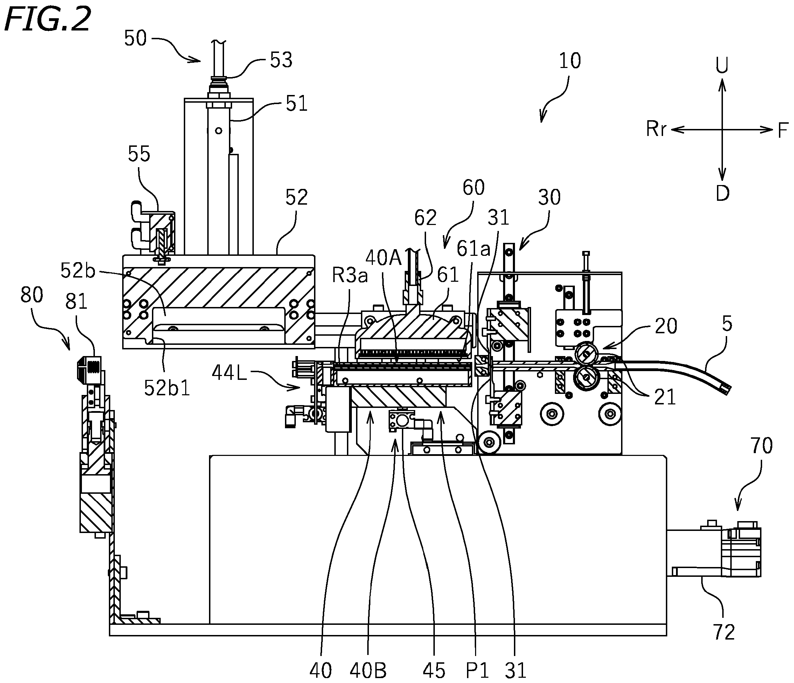

Hereinafter, an embodiment of the present invention will be described with reference to the drawings. FIG. 1 is a perspective view of a thermally shrinkable tube heating apparatus 10 according to an embodiment. FIG. 2 is a vertical cross-sectional view of the thermally shrinkable tube heating apparatus 10. The thermally shrinkable tube heating apparatus 10 according to this embodiment heats and shrinks a thermally shrinkable tube 5 having a drain wire 2 of a multi-core cable 1 inserted thereto. The multi-core cable 1 is an electric cable including the drain wire 2, a plurality of core wires 3 and a shield (not shown) and a sheath 4. The drain wire 2, the plurality of core wires 3 and the shield are covered with the sheath 4. The plurality of core wires 3 are used as, for example, signal lines transmitting electric signals. The shield (not shown) is a conductor that shields the core wires 3 against external noise. The shield covers the plurality of cores wires 3 from outside. The drain wire 2 is electrically connected with the shield. When being used, the drain wire 2 is grounded, and as a result, the shield is grounded. The drain wire 2 is formed of a plurality of uncovered wires and is not covered with an insulating member. The plurality of core wires 3 and the drain wire 2 are stranded together inside the shield. The shield is covered with the sheath 4 formed of an insulating material.

Before being attached to the thermally shrinkable tube heating apparatus 10, the multi-core cable 1 is subjected to a process of peeling off the sheath 4 at an end portion thereof, a process of loosening the plurality of core wires 3 and the drain wire 2, which have been stranded together, a process of separating the drain wire 2 and the core wires 3 from each other, and a process of extending the drain wire 2 straight and stranding the drain wire 2. As shown in FIG. 1, in this embodiment, the plurality of core wires 3 are bent from an axial direction of the cable 1, and as a result, the drain 2 and the core wires 3 are separated from each other. The drain wire 2 is corrected in terms of the shape thereof to be straight and is stranded. The thermally shrinkable tube heating apparatus 10 inserts a portion of the drain wire 2 that is not covered with the sheath into the thermally shrinkable tube 5, and then heats and shrinks the thermally shrinkable tube 5.

In this embodiment, the thermally shrinkable tube heating apparatus 10 heats the thermally shrinkable tube 5 having the drain wire 2 of the multi-core cable 1 inserted thereto. The thermally shrinkable tube heating apparatus 10 is not limited to this. The thermally shrinkable tube heating apparatus may heat and shrink a thermally shrinkable tube having another type of electric wire inserted thereto. As described below in detail, the thermally shrinkable tube heating apparatus 10 according to this embodiment performs a process of cutting the thermally shrinkable tube 5 into a predetermined length and a process of inserting the drain wire 2 into the thermally shrinkable tube 5, in addition to the process of heating and shrinking the thermally shrinkable tube 5. However, it is sufficient that the thermally shrinkable tube heating apparatus 10 is structured to at least heat and shrink the thermally shrinkable tube 5. The process of cutting the thermally shrinkable tube 5 into a predetermined length and the process of inserting the drain wire 2 into the thermally shrinkable tube 5 may be performed by another device or an operator.

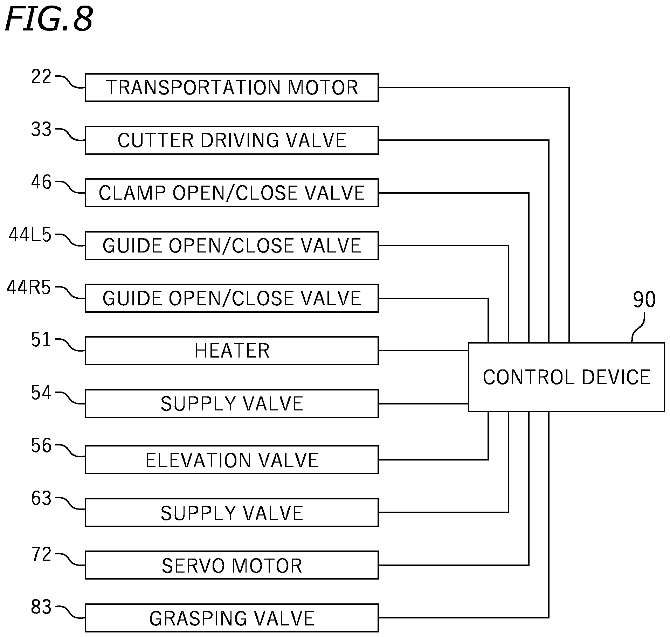

As shown in FIG. 1 and FIG. 2, the thermally shrinkable tube heating apparatus 10 includes a tube transportation device 20, a tube cutter 30, a tube holding device 40, a hot air generation device 50, a cool air generation device 60, a moving device 70, a cable holding device 80, and a control device 90 (see FIG. 8). As shown in FIG. 1, hereinafter, a tip side of the multi-core cable 1 in a state of being held by the cable holding device 80 will be referred to as the "front side" of the thermally shrinkable tube heating apparatus 10, and will be represented by letter "F". "Left" and "right" of the thermally shrinkable tube heating apparatus 10 are left and right as seen from the front side. In the drawings, F, Rr, L, R, U and D respectively represent front, rear, left, right, up and down of the thermally shrinkable tube heating apparatus 10. It should be noted that these directions are provided for the sake of convenience, and do not limit the manner of installing the thermally shrinkable tube heating apparatus 10 or the like in any way.

The tube transportation device 20 transports the thermally shrinkable tube 5 in a pre-cut state to the tube holding device 40. In this embodiment, the tube transportation device 20 transports the pre-cut thermally shrinkable tube 5 rearward substantially horizontally. As shown in FIG. 2, the tube transportation device 20 includes a pair of transportation rollers 21 and a transportation motor 22 (see FIG. 8). The pair of transportation rollers 21 are provided to face each other in an up-down direction, and hold the pre-cut thermally shrinkable tube 5 therebetween. When one of the transportation rollers 21 rotates rearward in this state, the pre-cut thermally shrinkable tube 5 is transported rearward. As a result, the thermally shrinkable tube 5 is transported to the tube holding device 40 positioned at the position shown in FIG. 1 and FIG. 2. The tube holding device 40 is provided to the rear of the tube transportation device 20. As described below in detail, the tube holding device 40 is structured to move in a front-rear direction. Hereinafter, the position of the tube holding device 40 shown in FIG. 1 and FIG. 2 will also be referred to as a "tube setting position P1". The tube setting position P1 is a front end of a movable range in which the tube holding device 40 is movable.

The tube cutter 30 cuts the thermally shrinkable tube 5 transported by the tube transportation device 20 into a predetermined length. The tube cutter 30 is provided between the tube transportation device 20 and the tube holding device 40. In a state where the thermally shrinkable tube 5 is inserted by the tube transportation device 20 into the tube holding device 40 by a predetermined length, the tube cutter 30 cuts the thermally shrinkable tube 5. As a result, the thermally shrinkable tube 5 cut into the predetermined length remains in the tube holding device 40. As shown in FIG. 1, the tube cutter 30 includes a cutter blade 31, an actuator 32 driving the cutter blade 31, and a cutter driving valve 33 (see FIG. 8). The actuator 32 moves the cutter blade 31 in the up-down direction so as to cross a moving route of the thermally shrinkable tube 5. As a result, the thermally shrinkable tube 5 is cut in the up-down direction (that is, perpendicularly to an axis thereof). In this embodiment, the actuator 32 is an air cylinder. It should be noted that there is no specific limitation on the type of the actuator 32. The cutter driving valve 33 controls air to be supplied to the actuator 32. The cutter driving valve 33 is, for example, an electromagnetic valve. The cutter driving valve 33 is connected with the control device 90, and is controlled by the control device 90.

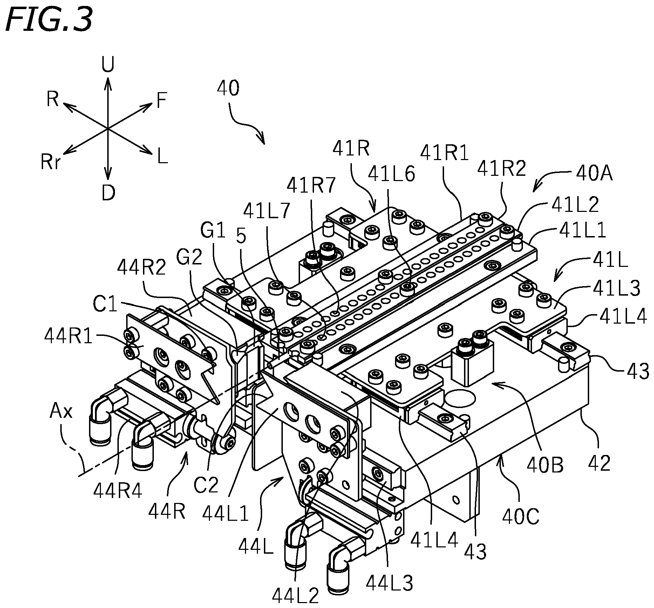

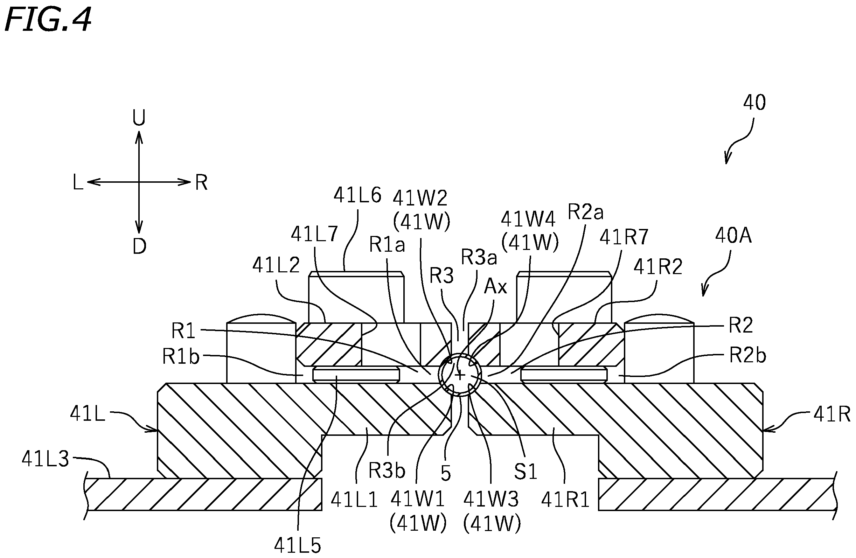

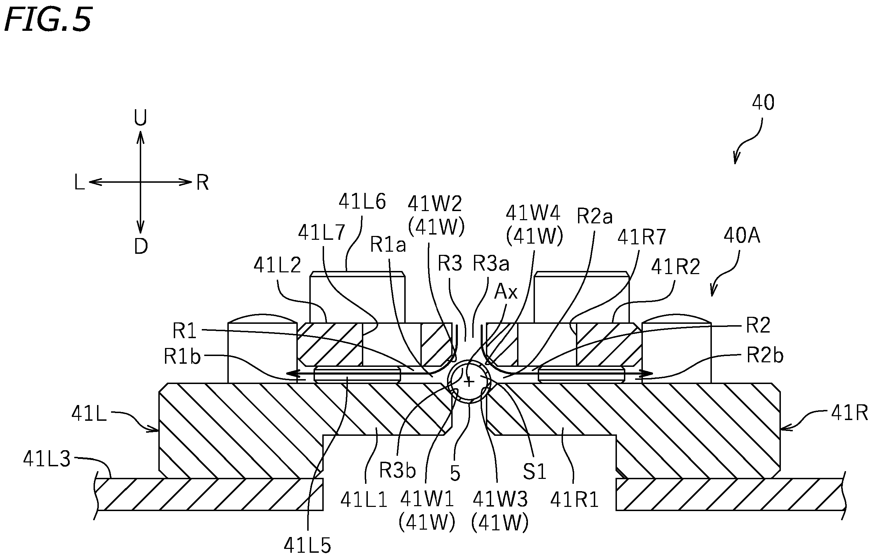

The tube holding device 40 holds the thermally shrinkable tube 5 in a post-cut state. As described above, the thermally shrinkable tube 5 is transported by the tube transportation device 20 to the tube holding device 40, and is held by the tube holding device 40. The drain wire 2 is inserted into the thermally shrinkable tube 5 held by the tube holding device 40. After that, the thermally shrinkable tube 5 is heated and shrunk while being held by the tube holding device 40 and having the drain wire 2 inserted thereto. The tube holding device 40 is capable of grasping or releasing the thermally shrinkable tube 5. FIG. 3 is a perspective view of the tube holding device 40. FIG. 4 is a vertical cross-sectional view of a main part of the tube holding device 40, showing the state where the tube holding device 40 grasps the thermally shrinkable tube 5. FIG. 5 is a vertical cross-sectional view of the main part of the tube holding device 40, showing the state where the tube holding device 40 releases the thermally shrinkable tube 5. As shown in FIG. 3 through FIG. 5, the tube holding device 40 includes a holding portion 40A, a driving mechanism 40B, and a base portion 40C. The holding portion 40A includes a left clamp 41L and a right clamp 41R, each movable in a left-right direction. As shown in FIG. 5, an accommodation space S1, in which the thermally shrinkable tube 5 is to be accommodated, is defined between the left clamp 41L and the right clamp 41R of the holding portion 40A. The driving mechanism 40B moves the left clamp 41L and the right clamp 41R in the left-right direction to cause the left clamp 41L and the right clamp 41R to grasp or release the thermally shrinkable tube 5 accommodated in the accommodation space S1. The base portion 40C supports the holding portion 40A and the driving mechanism 40B.

The left clamp 41L and the right clamp 41R are structured to be left-right-symmetrical to each other. Thus, hereinafter, the left clamp 41L will be described in detail. The description of the right clamp 41R will be simplified. As shown in FIG. 3 and FIG. 4, the left clamp 41L includes a bottom clamp 41L 1, a top clamp 41L2, a base plate 41L3, and slide blocks 41L4 (not shown in FIG. 4). The base plate 41L3 is flat plate-like, and extends in the front-rear direction and in the left-right direction. The base plate 41L3 supports the bottom clamp 41L1 and the top clamp 41L2 from below. The bottom clamp 41L1 is secured on the base plate 41L3. As shown in FIG. 3, the bottom clamp 41L1 extends in the front-rear direction and in the left-right direction. The length of the bottom clamp 41L1 in the front-rear direction is set to be equal, or substantially equal, to the length of the post-cut thermally shrinkable tube 5. A rear end of the bottom clamp 41L1 may be located to the rear of a rear end of the thermally shrinkable tube 5. There is no specific limitation on the length of the bottom clamp 41L1 in the left-right direction. In this embodiment, the length of the bottom clamp 41L1 in the left-right direction is shorter than the length of the bottom clamp 41L1 in the front-rear direction.

As shown in FIG. 5, a right top corner of the bottom clamp 41L1 is chamfered. This chamfered portion, represented by 41W1, acts as a part of a wall that forms the accommodation space S1. The chamfered portion 41W1 is located around an axis Ax of the accommodation space S1, and extends in a direction of the axis Ax (front-rear direction). The chamfered portion 41W1 is also one of grasping portions that contact the thermally shrinkable tube 5 when the left clamp 41L and the right clamp 41R grasp the thermally shrinkable tube 5. Hereinafter, the chamfered portion 41W1 will also be referred to as a "first grasping portion 41W1". The grasping portions including the first grasping portion 41W1 each have a shape that is not limited to a chamfered shape. The grasping portions may be pointed, and may protrude inward into the accommodation space S1. The grasping portions may each have a recessed round surface formed so as to correspond to a cross-sectional shape of the thermally shrinkable tube 5.

The top clamp 41L2 is located above the bottom clamp 41L1. The top clamp 41L2 is a flat plate-like member extending in the front-rear direction and in the left-right direction. As shown in FIG. 3, the positions of a front end and a rear end of the top clamp 41L2 are aligned with the positions of a front end and the rear end of the top clamp 41L2. It should be noted that it is sufficient that the length of the top clamp 41L2 in the front-rear direction is equal, or substantially equal, to the length of the post-cut thermally shrinkable tube 5, and does not need to be equal to the length of the top clamp 41L2 in the front-rear direction.

As shown in FIG. 4, a space R1 is provided between the bottom clamp 41L1 and the top clamp 41L2. The bottom clamp 41L1 and the top clamp 41L2 are separated from each other in the up-down direction. A spacer 41L5 is held between the bottom clamp 41L1 and the top clamp 41L2. The top clamp 41L2 is secured to the bottom clamp 41L1 by a bolt 41L6 in a state where the spacer 41L5 is held between the top clamp 41L2 and the bottom clamp 41L1. As a result, the space R1 is formed. The space R1 allows the accommodation space S1 and the outside of the holding portion 40A to be in communication with each other.

As described below in detail, the space R1 acts as a discharge flow path through which hot air that heats the thermally shrinkable tube 5 is discharged. Thus, hereinafter, the space R1 will also be referred to as a "first discharge flow path R1". The first discharge flow path R1 is a flat flow path extending in the front-rear direction. Regarding a cross-section of the first discharge flow path R1, the length thereof in the front-rear direction is longer than the length thereof in the up-down direction. The first discharge flow path R1 is formed in the entirety of the front-rear direction of the left clamp 41L. Hereinafter, among openings of the first discharge flow path R1, an opening opened to the accommodation space S1 will also be referred to as a "first outlet opening R1a", and an opening opened to an outer surface of the holding portion 40A will also be referred to as a "first discharge opening R1b". The first outlet opening R1a and the first discharge opening R1b are each a flat opening extending in the front-rear direction.

As shown in FIG. 5, a right bottom corner of the top clamp 41L2 is also chamfered, and acts as a part of the wall that forms the accommodation space S1. This chamfered portion, represented by 41W2, is also one of the grasping portions that contact the thermally shrinkable tube 5 when the left clamp 41L and the right clamp 41R grasp the thermally shrinkable tube 5. Hereinafter, the chamfered portion 41W2 will also be referred to as a "second grasping portion 41W2". In this embodiment, the second grasping portion 41W2 is located above the first grasping portion 41W1. The second grasping portion 41W2 is also located around the axis Ax of the accommodation space S1 extending in front-rear direction, and extends in the front-rear direction (in the axis Ax direction).

The top clamp 41L2 includes a plurality of discharge holes 41L7 running therethrough in the up-down direction. As shown in FIG. 3, the plurality of discharge holes 41L7 are aligned in the front-rear direction. The plurality of discharge holes 41L7 each run through the top clamp 41L2 from an outer surface of the holding portion 40A (in more detail, a top surface of the top clamp 41L2) to the first discharge flow path R1. As can be seen, the first discharge flow path R1 and the outside of the holding portion 40A are in communication with each other also via the plurality of discharge holes 41L7. The plurality of discharger holes 41L7 are ancillary discharge openings provided to allow the hot air to be discharged from the accommodation space S1 more efficiently.

In this embodiment, the bottom clamp 41L1 and the top clamp 41L2 of the left clamp 41L are formed of an aluminum alloy. The material used to form the clamps is not limited to aluminum or an aluminum alloy. A material that has a high thermal diffusivity (thermal conductivity divided by density and specific heat capacity) and is highly heat-resistant (e.g., having a melting point of 500 degrees or higher) is preferred. Forming the clamps of a material having a high thermal diffusivity improves the temperature controllability of the clamps. This is also applicable to a bottom clamp 41R1 and a top clamp 41R2 of the right clamp 41R.

The pair of slide blocks 41L4 are secured to a bottom surface of the base plate 41L3. The pair of slide blocks 41L4 are aligned in the front-rear direction, and are slidably in engagement with a pair of guide rails 43 provided in the base portion 40C. The pair of guide rails 43 each extend in the left-right direction. The left clamp 41L moves in the left-right direction by the pair of slide blocks 41L4 moving along the pair of guide rails 43.

The right clamp 41R is structured to be substantially the same as the left clamp 41L. As shown in FIG. 5, a left top corner of the bottom clamp 41R1 of the right clamp 41R is chamfered, and acts as a third grasping portion 41W3, which is a part of the wall of the accommodation space S1 and also is one of the grasping portions grasping the thermally shrinkable tube 5. A left bottom corner of the top clamp 41R2 of the right clamp 41R is also chamfered, and acts as a fourth grasping portion 41W4, which is a part of the wall of the accommodation space S1 and also is one of the grasping portions grasping the thermally shrinkable tube 5. The accommodation space S1 capable of accommodating the thermally shrinkable tube 5 is formed inner to the first grasping portion 41W1 through the fourth grasping portion 41W4. A space between the bottom clamp 41L1 and the top clamp 41L2 of the right clamp 41R acts as a second discharge flow path R2 extending in the left-right direction. The second discharge flow path R2 includes a second outlet opening R2a opened to the accommodation space S1 and a second discharge opening R2b opened to the outer surface of the holding portion 40A. Hereinafter, the first grasping portion 41W1 through the fourth grasping portion 41W4 will collectively be referred to as a "wall 41W" when necessary.

A gap R3 is provided between the top clamp 41L2 of the left clamp 41L and the top clamp 41R2 of the right clamp 41R. As shown in FIG. 4 and FIG. 5, in this embodiment, the left clamp 41L and the right clamp 41R are separated from each other to form the gap R3 both in the state where the left clamp 41L and the right clamp 41R release the thermally shrinkable tube 5 and in the state where the left clamp 41L and the right clamp 41R grasp the thermally shrinkable tube 5. It should be noted that the left clamp 41L and the right clamp 41R may contact each other in the state where the left clamp 41L and the right clamp 41R grasp the thermally shrinkable tube 5. In other words, it is sufficient that the left clamp 41L and the right clamp 41R are separated from each other to form the gap R3 at least in the state where the left clamp 41L and the right clamp 41R release the thermally shrinkable tube 5. The gap R3 acts as an inlet flow path R3, into which the hot air flows toward the accommodation space S1. The inlet flow path R3 extends in the up-down direction. The inlet flow path R3 includes a supply opening R3a opened to the outer surface of the holding portion 40A and an inlet opening R3b opened to the accommodation space S1. The supply opening R3a and the inlet opening R3b are flat openings extending in the axis Ax direction of the accommodation space S1 (extending in the front-rear direction). The inlet flow path R3 is a flat flow path extending in the axis Ax direction of the accommodation space S1 (extending in the front-rear direction), and is formed in the entirety of the front-rear direction of the holding portion 40A. The gap R3 may form a discharge flow path for the hot air in the case where the hot air generation device 50 is located at a certain position. It is sufficient that the holding portion 40A includes at least one inlet flow path and at least one discharge flow path. There is no specific limitation on the number of each of the inlet flow path(s) and the discharge flow path(s), the direction in which the inlet flow path(s) and the discharge flow path(s) are formed, how the inlet flow path(s) and the discharge flow path(s) are formed (e.g., whether the inlet flow path(s) and the discharge flow path(s) are formed of gaps between the plurality of clamps or formed in the clamps), or the like.

As shown in FIG. 4, the inlet opening R3b of the inlet flow path R3 is opened to cross a part of the wall 41W of the accommodation space S1 (in this embodiment, the second grasping portion 41W2 and the fourth grasping portion 41W4) and is on the accommodation portion S1. The first outlet opening R1a of the first discharge flow path R1 and the second outlet opening R2a of the second discharge flow path R2 are also each opened to cross a part of the wall 41W of the accommodation space S1, and are on the accommodation space S1. As shown in FIG. 4, in this embodiment, as seen in the axis Ax direction of the accommodation space S1, the opening direction of the inlet opening R3b (in this embodiment, the up-down direction) and the opening direction of the first outlet opening R1a (in this embodiment, the left-right direction) are shifted from each other by 90 degrees. The second outlet opening R2a, which is an outlet opening of the second discharge flow path R2, is provided symmetrically to the first outlet opening R1a with respect to the opening direction of the inlet opening R3b (in this embodiment, the up-down direction), and the opening direction of the second outlet opening R2a is shifted by 90 degrees from the opening direction of the inlet opening R3b.

In this embodiment, a total cross-sectional area of the first discharge flow path R1 and the second discharge flow path R2 is larger than a cross-sectional area of the inlet flow path R3 (in the state where the clamps 41L and 41R release the thermally shrinkable tube 5). That is, the discharge route for the hot air is formed to be larger than the supply route for the hot air. As a result, the hot air is discharged efficiently. It should be noted that the total cross-sectional area of the discharge route does not need to be larger than the cross-sectional area of the supply route.

As shown in FIG. 3, the holding portion 40A is supported from below by the base portion 40C. The base portion 40C includes a rectangular parallelepiped block-like base block 42. The pair of guide rails 43 are provided on a top surface of the base block 42. The pair of guide rails 43 are aligned in the front-rear direction, and each extend in the left-right direction. The left clamp 41L and the right clamp 41R are in engagement with the pair of guide rails 43 so as to be movable in the left-right direction.

The driving mechanism 40B drives the left and right clamps 41L and 41R in a radial direction of the accommodation space S1 to cause the left and right clamps 41L and 41R to grasp or release the thermally shrinkable tube 5 accommodated in the accommodation space S1. As described above, in this embodiment, the two clamps 41L and 41R move in the left-right direction. It should be noted that the clamps 41L and 41R may move in any direction with no specific limitation as long as the moving direction is the radial direction of the accommodation space S1. The driving mechanism 40B includes an actuator 45 (see FIG. 2), a clamp open/close valve 46 (see FIG. 8), and a synchronization mechanism (not shown) synchronizing the movements of the clamps 41L and 41R. In this embodiment, the actuator 45 is an air cylinder. The left and right clams 41L and 41R are connected with the actuator 45 via the synchronization mechanism (not shown). It should be noted that there is no specific limitation on the type of the actuator 45, and an actuator other than an air cylinder may be used. The clamp open/close valve 46 controls the direction of the air to be supplied to the actuator 45. The clamp open/close valve 46 is, for example, an electromagnetic valve. The clamp open/close valve 46 is connected with the control device 90, and is controlled by the control device 90.

As shown in FIG. 3, the base portion 40C further includes a pair of drain wire guides 44L and 44R. The pair of drain wire guides 44L and 44R guide the drain wire 2 such that an axis of the drain wire 2 substantially matches the axis Ax of the accommodation space S1. The pair of drain wire guides 44L and 44R are provided on a rear surface of the base block 42, and are aligned in the left-right direction. The left drain wire guide 44L and the right drain wire guide 44R are structured to be substantially left-right-symmetrical to each other except for a part thereof. Thus, the right drain wire guide 44R will be described. The right drain wire guide 44R includes a guide plate 44R1, a guide block 44R2, a rail (not shown in FIG. 3, see a rail 44L3 of the left drain wire guide 44L structured to be left-right-symmetrical to the right drain wire guide 44R), an actuator 44R4, and a guide open/close valve 44R5 (see FIG. 8). The rail (not shown) extends in the left-right direction (see the left rail 44L3). The guide plate 44R1 and the guide block 44R2 are slidably in engagement with the rail, and are movable in the left-right direction along the rail. The actuator 44R4 is connected with the guide plate 44R1 and the guide block 44R2, and moves the guide plate 44R1 and the guide block 44R2 along the rail. In this embodiment, the actuator 44R4 is an air cylinder. It should be noted that there is no specific limitation on the type of the actuator 44R4. The guide open/close valve 44R5 controls the direction of the air to be supplied to the actuator 44R4. The guide open/close valve 44R5 is, for example, an electromagnetic valve. The guide open/close valve 44R5 is connected with the control device 90, and is controlled by the control device 90.

The guide plate 44R1 is flat plate-like, and extends in the left-right direction and in the up-down direction. As seen in the front-rear direction, the guide plate 44R1 has a substantially triangular cutout portion C1 at a left end thereof. Because of the cutout portion C1, the left end of the guide plate 44R1 is recessed rightward. A left guide plate 44L1 is structured to be substantially left-right-symmetrical to the right guide plate 44R1. The left guide plate 44L1 of the left drain wire guide 44L is provided to the front of the right guide plate 44R1 of the right drain wire guide 44R. Although not shown, when the guide plate 44L1 of the left drain wire guide 44L is moved rightward and the guide plate 44R1 of the right drain wire guide 44R is moved leftward (hereinafter, this operation will also be referred to as "closing the drain wire guides 44L and 44R"), the guide plates 44L1 and 44R1 approach each other and partially overlap as seen in the front-rear direction. In this state, the guide plates 44L1 and 44R1 are shifted from each other in the front-rear direction. The cutout portion C1 of the right guide plate 44R1 and a cutout portion C2 of the left guide plate 44L1 partially overlap each other as seen in the front-rear direction and thus form a gate through which the drain wire 2 may pass.

The right guide block 44R2 is provided to the front of the guide plate R1. As shown in FIG. 3, the guide block 44R2 includes a semicylindrical straight groove G1 and a semi-conical tapering groove G2. The straight groove G1 and the tapering groove G2 are provided in a left surface of the guide block 44R2. The straight groove G1 extends in the front-rear direction. A front end of the straight groove G1 reaches a front surface of the guide block 44R2. A radius of a front portion, which occupies a majority of the straight groove G1, is set to be slightly longer than a radius of the thermally shrinkable tube 5. A radius of a rear portion, which is a part of the straight groove G1, is set to be shorter than the radius of the thermally shrinkable tube 5. A border between the portions having different radii of the straight groove G1 is stepped. The tapering groove G2 is provided to the rear of the straight groove G1, and is connected with a rear end of the straight groove G1. The tapering groove G2 expands as extending rearward. A rear end of the tapering groove G2 reaches a rear surface of the guide block 44R2. A left guide block 44L2 also includes substantially the same straight groove and substantially the same tapering groove.

Although not shown, when the drain wire guides 44L and 44R are closed and thus the guide blocks 44L2 and 44R2 approach each other, the two straight grooves form a substantially cylindrical path. This substantially cylindrical path is a tube path into which the thermally shrinkable tube 5 is to be inserted. The thermally shrinkable tube 5 is insertable into a portion of the tube path to the front of the stepped portion. A portion of the tube path to the rear of the stepped portion has a shorter diameter, and the thermally shrinkable tube 5 is not insertable to this portion. The two tapering grooves form a truncated conical path expanding as extending rearward. This truncated conical path is a guide path that guides the drain wire 2. Axes of the tube path and the guide path substantially match the axis Ax of the accommodation space S1.

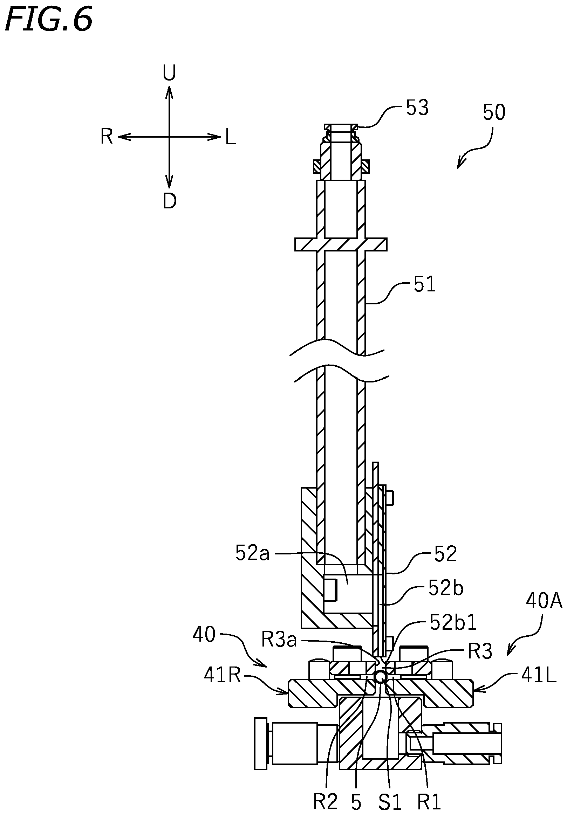

As shown in FIG. 2, the hot air generation device 50 is located to the rear of the tube holding device 40 positioned at the tube setting position P1. The hot air generation device 50 generates hot air that heats the thermally shrinkable tube 5. As shown in FIG. 1, the hot air generation device 50 includes a heater 51, a heater nozzle 52, an air connection portion 53, a supply valve 54 (see FIG. 8), an actuator 55, an elevation valve 56 (see FIG. 8), and a guide rail (not shown). FIG. 6 is a cross-sectional view of the hot air generation device 50 as seen from the rear thereof. FIG. 2 shows a cross-sectional view of the hot air generation device 50 as seen from the left thereof. As shown in FIG. 6, the heater 51 is a pillar-shaped heater. The heater 51 is provided such that an axis thereof is directed in the up-down direction. The air connection portion 53 is connected with a top end of the heater 51. The air connection portion 53 is connected with, for example, a tube connected with an air compressor. Compressed air supplied to the air connection portion 53 is heated while passing through the heater 51, and is blown out from a bottom end of the heater 51 as hot air. The supply valve 54 controls the supply of the compressed air into the air connection portion 53. The supply valve 54 is connected with the control device 90, and is controlled by the control device 90.

The heater nozzle 52 is attached to the bottom end of the heater 51. The heater nozzle 52 includes a front chamber 52a connected to the bottom end of the heater 51, and a nozzle portion 52b provided to the left of the front chamber 52a. The nozzle portion 52b is in communication with the heater 51 via the front chamber 52a. As shown in FIG. 2 and FIG. 6, the nozzle portion 52b includes a flat inner space that is long in the front-rear direction and short in the left-right direction. A bottom surface of the nozzle portion 52b is opened, and acts as a hot air outlet 52b1, through which the hot air is blown out. The hot air is blown out downward from the hot air outlet 52b1. The hot air outlet 52b1 has a flat shape that is long in the front-rear direction and short in the left-right direction. The length of the hot air outlet 52b1 in the front-rear direction is equal, or substantially equal, to the length of the supply opening R3a of the holding portion 40A. The hot air outlet 52b1 is located at a position aligned with the supply opening R3a of the holding portion 40A in the left-right direction.

The heater 51, the heater nozzle 52 and the air connection portion 53 are movable by the actuator 55 in the up-down direction along the guide rail (not shown). The guide rail extends in the up-down direction. In this embodiment, the actuator 55 is an air cylinder. It should be noted that there is no specific limitation on the type of the actuator 55. The elevation valve 56 controls the direction of the air to be supplied to the actuator 55. The elevation valve 56 is, for example, an electromagnetic valve. The elevation valve 56 is connected with the control device 90, and is controlled by the control device 90. The heater nozzle 52 is structured such that the hot air outlet 52b1 contacts the supply opening R3a of the holding portion 40A in a state where the heater nozzle 52 is at a bottom end of a movable range in which the heater nozzle 52 is movable. It should be noted that the heater nozzle 52 may be structured such that the hot air outlet 52b1 is slightly above the supply opening R3a in the state where the heater nozzle 52 is at the bottom end of the movable range thereof.

The cool air generation device 60 is provided above the tube holding device 40 positioned at the tube setting position P1. The cool air generation device 60 generates cool air that cools the holding portion 40A. The holding portion 40A is cooled in order to prevent a situation where when the thermally shrinkable tube 5 is held by the holding portion 40A, the thermally shrinkable tube 5 is shrunk by the holding portion 40A heated by the heating of a previous thermally shrinkable tube 5. As shown in FIG. 2, the cool air generation device 60 includes a cool air nozzle 61, an air connection portion 62, and a supply valve 63 (see FIG. 8). The air connection portion 62 is provided at a top end of the cool air nozzle 61. The air connection portion 62 is connected with, for example, a tube connected with an air compressor. A bottom surface of the cool air nozzle 61 is opened, and acts as a cool air outlet 61a, through which cool air is blown out. The cool air is blown out downward from the cool air outlet 61a. The cool air outlet 61a has a flat shape that is long in the front-rear direction and short in the left-right direction. The length of the cool air outlet 61a in the front-rear direction is equal, or substantially equal, to the length of the supply opening R3a of the holding portion 40A. The cool air outlet 61a is located at a position aligned with the supply opening R3a of the holding portion 40A in the left-right direction. The cool air outlet 61a is located slightly above the supply opening R3a of the holding portion 40A. The supply valve 63 controls the supply of compressed air into the air connection portion 62. The supply valve 63 is connected with the control device 90, and is controlled by the control device 90.

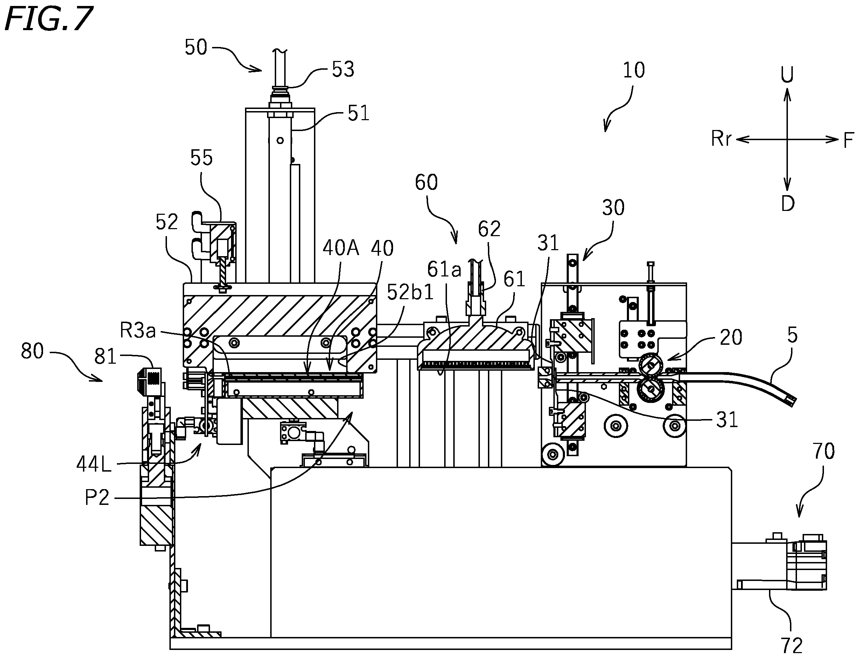

The moving device 70 moves the tube holding device 40 in the front-rear direction. FIG. 7 is a vertical cross-sectional view of the thermally shrinkable tube heating apparatus 10 in a state where the tube holding device 40 is at a heating position P2. The heating position P2 is set to the rear of the tube setting position P1 (see FIG. 2). The heating position P2 is a rear end of the movable range of the tube holding device 40. The tube holding device 40 is moved by the moving device 70 between the tube setting position P1 and the heating position P2. The moving device 70 moves the tube holding device 40 in the axis Ax direction of the accommodation space S1 to insert the drain wire 2 into the thermally shrinkable tube 5 accommodated in accommodation space S1. In this embodiment, the moving device 70 is also a switch device that moves the tube holding device 40 to selectively cause the hot air outlet 52b1 of the hot air generation device 50 or the cool air outlet 61a of the cool air generation device 60 to face the supply opening R3a of the tube holding device 40. It should be noted that it is sufficient that the moving device 70 is structured to move at least one of the drain wire 2 to be inserted into the thermally shrinkable tube 5 and the holding portion 40A in the axis Ax direction of the accommodation space S1 to insert the drain wire 2 into the thermally shrinkable tube 5 accommodated in the accommodation space S1. The moving device 70 may move only the drain wire 2, or may move both of the drain wire 2 and the holding portion 40A. The moving device and the switch device may be different devices. It is sufficient that the switch device is capable of moving at least one of the hot air generation device 50, the cool air generation device 60 and the holding portion 40A to cause the hot air outlet 52b1 or the cool air outlet 61a to face the supply opening R3a of the holding portion 40A.

As shown in FIG. 1, the moving device 70 includes a guide rail 71, a servo motor 72, and a ball screw (not shown). The guide rail 71 extends in the front-rear direction. The tube holding device 40 is slidably in engagement with the guide rail 71. The tube holding device 40 is movable in the front-rear direction along the guide rail 71. The tube holding device 40 includes a nut (not shown) in engagement with the ball screw (not shown). The servo motor 72 is connected with the ball screw and rotates the ball screw. The servo motor 72 drives the ball screw to rotate, and as a result, the tube holding device 40 moves in the front-rear direction along the guide rail 71. The servo motor 72 is connected with the control device 90, and is controlled by the control device 90. It should be noted that the moving device 70 is not limited to including an electric motor and a ball screw. The actuator moving the tube holding device 40 may be, for example, an air cylinder.

As shown in FIG. 7, the tube holding device 40 positioned at the heating position P2 is located below the hot air generation device 50. While the tube holding device 40 is at the heating position P2, the hot air outlet 52b1 of the hot air generation device 50 faces the supply opening R3a of the tube holding device 40. As shown in FIG. 2, the tube holding device 40 positioned at the tube setting position P1 is located below the cool air generation device 60. While the tube holding device 40 is at the tube setting position P1, the cool air outlet 61a of the cool air generation device 60 faces the supply opening R3a of the tube holding device 40.

As shown in FIG. 7, the cable holding device 80 is provided to the rear of the tube holding device 40 positioned at the heating position P2. As shown in FIG. 1, the cable holding device 80 includes a cable clamp 81, an actuator 82, and a grasping valve 83 (see FIG. 8). The cable clamp 81 is capable of grasping a portion of the multi-core cable 1 that is covered with the sheath 4. The multi-core cable 1 is held by the cable holding device 80 such that an axis of the multi-core cable 1 matches the front-rear direction and that the multi-core cable 1 is substantially horizontal. The axis of the multi-core cable 1 held by the cable holding device 80 substantially matches the axis Ax of the accommodation space S1. The actuator 82 opens or closes the cable clamp 81 to cause the cable clamp 81 to release or grasp the multi-core cable 1. In this embodiment, the actuator 82 is an air cylinder. It should be noted that the actuator 82 is not limited to an air cylinder. The grasping valve 83 controls the direction of the air to be supplied to the actuator 82. The grasping valve 83 is, for example, an electromagnetic valve. The grasping valve 83 is connected with the control device 90, and is controlled by the control device 90.

As shown in FIG. 1, in the state where the multi-core cable 1 is held by the cable holding device 80, the stranded drain wire 2 is held such that the axis thereof matches the front-rear direction and that the drain wire 2 is substantially horizontal. While the multi-core cable 1 is held by the cable holding device 80, the axis of the drain wire 2 substantially matches the axis Ax of the accommodation space S1. As shown in FIG. 1, the plurality of core wires 3 are bent downward from an end or the vicinity of the sheath 4.

The thermally shrinkable tube heating apparatus 10 includes the control device 90 controlling operations of various components thereof. FIG. 8 is a block diagram of the thermally shrinkable tube heating apparatus 10. The control device 90 is connected with the transportation motor 22 of the tube transportation device 20, the cutter driving valve 33 of the tube cutter 30, the clamp open/close valve 46 and the guide open/close valves 44L5 and 44R5 of the tube holding device 40, the heater 51, the supply valve 54 and the elevation valve 56 of the hot air generation device 50, the supply valve 63 of the cool air generation device 60, the servo motor 72 of the moving device 70, and the grasping valve 83 of the cable holding device 80, and controls the operations thereof.

There is no specific limitation on the structure of the control device 90. The control device 90 may include, for example, a central processing unit (hereinafter, referred to as a "CPU"), a ROM storing, for example, a program to be executed by the CPU, a RAM, and the like. Each of portions of the control device 90 may be formed of software or hardware. Each of the portions may be a processor or a circuit. The control device 90 may be, for example, a programmable controller, a computer, or the like.

As described below in detail regarding the process, the control device 90 is configured to control the transportation motor 22 to transport the pre-cut thermally shrinkable tube 5 to the tube holding device 40 positioned at the tube setting position P1. The control device 90 controls the tube cutter 30 to cut the thermally shrinkable tube 5. The control device 90 controls the driving mechanism 40B of the tube holding device 40 to cause the clamps 41L and 41R to grasp the thermally shrinkable tube 5, and controls the moving device 70 in this state to insert the drain wire 2 into the thermally shrinkable tube 5. Specifically, the tube holding device 40 is moved to the heating position P2, so that the drain wire 2 is inserted into the thermally shrinkable tube 5. After the drain wire 2 is inserted into the thermally shrinkable tube 5, the control device 90 controls the driving mechanism 40B of the tube holding device 40 to cause the clamps 41L and 41R to release the thermally shrinkable tube 5. The control device 90 further controls the hot air generation device 50 to lower the heater nozzle 52, so that the hot air is sent into the supply opening R3a of the holding portion 40A. The control device 90, after that, returns the tube holding device 40 to the tube setting position P1 and controls the cool air generation device 60 to send the cool air into the supply opening R3a of the holding portion 40A.

### [Process of attaching the thermally shrinkable tube to the drain wire]

Hereinafter, a process of attaching the thermally shrinkable tube 5 to the drain wire 2 will be described. The following description will be start from a state where the multi-core cable 1 is held by the cable holding device 80, the tube holding device 40 is at the tube setting position P1, the clamps 41L and 41R are opened, and the heater nozzle 52 is located at a top end of the movable range thereof. In the process described in this embodiment, the heater 51 of the hot air generation device 50 is continuously kept driven in order to supply the hot air stably.

In the process of attaching the thermally shrinkable tube 5 to the drain wire 2, first, the drain wire guides 44L and 44R are closed. As a result, the tube path into which the thermally shrinkable tube 5 is to be inserted and the guide path for the drain wire 2 are formed by the guide blocks 44L2 and 44R2. Also as a result of the drain wire guides 44L and 44R being closed, the gate for the drain wire 2 is formed by the guide plates 44L1 and 44R2. This step may be performed at any timing before a step, described below, of pushing the thermally shrinkable tube 5 into the tube path.

Next to the step of closing the drain wire guides 44L and 44R, the pre-cut thermally shrinkable tube 5 is inserted by the tube transportation device 20 by a predetermined length into the accommodation space S1 of the tube holding device 40. In the next step, the driving mechanism 40B of the tube holding device 40 is driven to cause the clamps 41L and 41R to grasp the thermally shrinkable tube 5. As a result, the thermally shrinkable tube 5 is unmovably secured to the tube holding device 40. After this, the tube cutter 30 is driven to cut the thermally shrinkable tube 5. It should be noted that in the step of cutting the thermally shrinkable tube 5, the tube holding device 40 does not need to grasp the thermally shrinkable tube 5.

In the next step, the clamps 41L and 41R are opened to release the thermally shrinkable tube 5. As a result, the thermally shrinkable tube 5 is made movable with respect to the tube holding device 40. In the next step, a next thermally shrinkable tube 5 is inserted into the accommodation space S1 by the tube transportation device 20. As a result of the next thermally shrinkable tube 5 being inserted into the accommodation space S1, the thermally shrinkable tube 5 that is now being processed is pushed rearward and hits the stepped portion of the tube path formed by the drain wire guides 44L and 44R. In the next step, the next thermally shrinkable tube 5 is retracted from the accommodation space S1.

In the next step, the clamps 41L and 41R grasp the thermally shrinkable tube 5 again. After this, the drain wire guides 44L and 44R are opened. In the next step, the moving device 70 is driven to move the tube holding device 40 to the heating position P2. This movement of the tube holding device 40 causes the drain wire 2 to be inserted into the thermally shrinkable tube 5. While the tube holding device 40 is moved to the heating position P2, the drain wire guides 44L and 44R are closed at a timing when a tip of the drain wire 2 is located to the front of the guide plates 44L1 and 44R1 and to the rear of the guide blocks 44L2 and 44R2. As a result, the drain wire 2 goes into the gate for the drain wire 2 formed by the guide plates 44L1 and 44R1, and a posture thereof is corrected along the cutout portions C1 and C2. The drain wire 2 is guided by the gate into the guide path for the drain wire 2 formed by the two tapering grooves. The drain wire 2 is guided along the tapering shape of the guide path to the thermally shrinkable tube 5 hitting the stepped portion of the tube path. At this point, the tube holding device 40 grasps the thermally shrinkable tube 5 such that the thermally shrinkable tube 5 does not move. As a result of the tube holding device 40 moving to the heating position P2, the supply opening R3a of the holding portion 40A moves to a position below the hot air outlet 52b1 of the hot air generation device 50.

In the next step, the driving mechanism 40B of the tube holding device 40 is driven to release the thermally shrinkable tube 5. As a result, as shown in FIG. 5, the thermally shrinkable tube 5 is separated from the wall 41W of the accommodation space S1 except for a bottom portion thereof. At this point, as shown in FIG. 5, the bottom portion of the thermally shrinkable tube 5 is on the first grasping portion 41W1 and the third grasping portion 41W3. There is a gap between each of a left portion, a right portion and a top portion of the thermally shrinkable tube 5 and the wall 41W of the accommodation space S1. As a result, the inlet opening R3b of the inlet flow path R3, the first outlet opening R1a of the first discharge flow path R1, and the second outlet opening R2a of the second discharge flow path R2, which are closed by the thermally shrinkable tube 5 while the thermally shrinkable tube 5 is grasped by the clamps 41L and 41R, are opened. In the process described in this embodiment, the drain wire guides 44L and 44R are opened at this point. Alternatively, the drain wire guides 44L and 44R may be kept closed.

After the thermally shrinkable tube 5 is released, the actuator 55 of the hot air generation device 50 is driven to lower the heater nozzle 52. As a result, the hot air is supplied into the supply opening R3a of the holding portion 40A. In this embodiment, the hot air generation device 50 keeps driving the heater 51 during the process. Alternatively, the hot air generation device 50 may drive the heater 51 immediately before or immediately after lowering the heater nozzle 52. In FIG. 5, the arrows show the flow of the hot air at this point. As shown in FIG. 5, the hot air flows into the inlet flow path R3 through the supply opening R3a, and flows into the accommodation space S1 through the inlet opening R3b. As a result, the thermally shrinkable tube 5 is heated and thus is shrunk. A part of the hot air passes between the second grasping portion 41W2 and an outer circumferential surface of the thermally shrinkable tube 5 to flow into the first outlet opening R1a of the first discharge flow path R1. A part of the hot air flowing into the first outlet opening R1a passes through the first discharge flow path R1 and is discharged from the first discharge opening R1b. Another part of the hot air flowing into the first outlet opening R1a is discharged from the discharge holes 41L7 in communication with the first discharge flow path R1. Similarly, as shown in FIG. 5, another part of the hot air flowing into the accommodation space S1 through the inlet opening R3b passes between the fourth grasping portion 41W4 and the outer circumferential surface of the thermally shrinkable tube 5 to flow into the second outlet opening R2a of the second discharge flow path R2. A part of the hot air flowing into the second discharge opening R2a passes through the second discharge flow path R2 and is discharged from the second discharge opening R2b. Another part of the hot air flowing into the second discharge opening R2a is discharged from the discharge holes 41R7 of the right clamp 41R that are in communication with the second discharge flow path R2.

In this manner, the hot air flowing into the accommodation space S1 is discharged form the accommodation space S1, and thus new hot air is allowed to flow into the accommodation space S1. The new hot air has not been deprived of heat by the thermally shrinkable tube 5 or the clamps 41L and 41R, and therefore, has a large amount of heat. Therefore, the thermally shrinkable tube 5 is heated at high speed.

In this embodiment, after a lapse of time required to shrink the thermally shrinkable tube 5 with certainty, the heater nozzle 52 is raised. This time is found by, for example, checking the states of the thermally shrinkable tube 5 heated for various lengths of time by the thermally shrinkable tube heating apparatus 10 according to this embodiment.

In the next step, the tube holding device 40 is moved to the tube setting position P1 again. As a result, the drain wire 2 having the thermally shrinkable tube 5 attached thereto is detached from the accommodation space S1 of the tube holding device 40. As a result of the tube holding device 40 being moved to the tube setting position P1, the supply opening R3a of the holding portion 40A is moved to a position below the cool air outlet 61a of the cool air generation device 60.

In the next step, the cool air generation device 60 is driven to supply the cool air into the supply opening R3a of the holding portion 40A. As a result, the clamps 41L and 41R heated by the hot air from the hot air generation device 50 are cooled. As described above, this operation is performed to prevent a situation where the next thermally shrinkable tube 5, when being accommodated in the accommodation space S1, is heated by the clamps 41L and 41R and thus shrunk. In this embodiment, after a lapse of time required to cool the clamps 41L and 41R with certainty, the blow of the cool air from the cool air generation device 60 is stopped. This time is found by, for example, measuring temperatures of a plurality of sites of the holding portion 40A while cooling the clamps 41L and 41R. The stop of the cool air terminates one cycle of operation of attaching the thermally shrinkable tube 5 to the drain wire 2.

### [Functions and effects of the embodiment]

Hereinafter, functions and effects of the thermally shrinkable tube heating apparatus 10 according to this embodiment will be described.

The thermally shrinkable tube heating apparatus 10 according to this embodiment includes the holding portion 40A including the accommodation space S1 capable of accommodating the thermally shrinkable tube 5, and the hot air generation device 50 generating the hot air. The holding portion 40A includes the inlet flow path R3. The inlet flow path R3 includes the supply opening R3a opened to the outer surface of the holding portion 40A and the inlet opening R3b opened to the wall 41W of the accommodation space S1. The holding portion 40A further includes the first discharge flow path R1. The first discharge flow path R1 includes the first outlet opening R1a opened to the wall 41W of the accommodation space S1 and the first discharge opening R1b opened to the outer surface of the holding portion 40A. The hot air generation device 50 sends hot air into the supply opening R3a. With such a structure, the hot air supplied into the supply opening R3a flows into the accommodation space S1, and then passes through the first discharge flow path R1 and is discharged to the outside of the holding portion 40A. As a result of the hot air being discharged from the accommodation space S1, hot air having a high temperature generated by the hot air generation device 50 is continuously sent into the accommodation space S1 while the thermally shrinkable tube 5 is heated. Therefore, the thermally shrinkable tube 5 is heated and shrunk quickly.

According to the knowledge of the present inventors, unless the accommodation space S1 accommodating the thermally shrinkable tube 5 is provided in the holding portion 40A, the thermally shrinkable tube 5 is moved by the hot air and therefore, is not heated in a preferred manner. According to the knowledge of the present inventors, unless a discharge flow path (either one of, or both of, the first discharge flow path R1 and the second discharge flow path R2) in communication with the accommodation space S1 is provided to discharge the hot air from the discharge flow path, new hot air having a high temperature does not easily flow into the accommodation space S1, and therefore, the heating efficiency is not improved. Based on such knowledge, the thermally shrinkable tube heating apparatus 10 according to this embodiment includes the accommodation space S1, the first discharge flow path R1 and the second discharge flow path R2. Therefore, the thermally shrinkable tube 5 is heated and shrunk in a short period of time.

In this embodiment, the holding portion 40A includes the plurality of clamps 41L and 41R each including a part of the wall 41W of the accommodation space S1. In more detail, the left clamp 41L includes the first grasping portion 41W1 and the second grasping portion 41W2 each as a part of the wall 41W of the accommodation space S1. The right clamp 41R includes the third grasping portion 41W3 and the fourth grasping portion 41W4 each as a part of the wall 41W of the accommodation space S1. The driving mechanism 40B of the tube holding device 40 is structured to cause the clamps 41L and 41R to grasp or release the thermally shrinkable tube 5 held in the accommodation space S1. With the thermally shrinkable tube heating apparatus 10 according to this embodiment, the drain wire 2 is inserted into the thermally shrinkable tube 5 in the state where the clamps 41L and 41R grasp the thermally shrinkable tube 5; and after the drain wire 2 is inserted into the thermally shrinkable tube 5, the plurality of clamps 41L and 41R release the thermally shrinkable tube 5. The thermally shrinkable tube heating apparatus 10 is configured to, after that, control the hot air generation device 50 to send the hot air into the supply opening R3a. With such a structure, while the drain wire 2 is inserted into the thermally shrinkable tube 5, the thermally shrinkable tube 5 is grasped by the clamps 41L and 41R such that the thermally shrinkable tube 5 is not moved by the insertion work. In addition, while the hot air is sent into the supply opening R3a, the thermally shrinkable tube 5 is released to form a gap between each of the grasping portions 41W1 through 41W4 of the clamps 41L and 41R and the outer circumferential surface of the thermally shrinkable tube 5, such that the hot air flows through the gap (see FIG. 5). As shown in FIG. 4, in the state where the clamps 41L and 41R grasp the thermally shrinkable tube 5, the grasping portions 41W1 through 41W4 of the clamps 41L and 41R and the outer circumferential surface of the thermally shrinkable tube 5 are in contact with each other. Thus, the hot air does not easily flow along the outer circumferential surface of the thermally shrinkable tube 5. In this embodiment, the clamps 41L and 41R release the thermally shrinkable tube 5 while the hot air is sent into the supply opening R3a, and therefore, the hot air easily flows along the outer circumferential surface of the thermally shrinkable tube 5. This allows the thermally shrinkable tube 5 to be heated and shrunk more quickly.

In addition, in this embodiment, the plurality of clamps 41L and 41R are structured to be separated from each other to form a gap at least in the state of releasing the thermally shrinkable tube 5. This gap forms the inlet flow path R3. With such a structure, the gap formed by the left clamp 41L and the right clamp 41R being separated from each other is used as the inlet flow path R3. Therefore, the structure of the holding portion 40A is simplified.

In this embodiment, the moving device 70 is structured to move the tube holding device 40 to cause the hot air outlet 52b1 of the hot air generation device 50 or the cool air outlet 61a of the cool air generation device 60 to face the supply opening R3a of the holding portion 40A. With such a structure, the moving device 70 provided to insert the drain wire 2 into the thermally shrinkable tube 5 is also usable as a switch device that switches the hot air and the cold air to each other. Therefore, the number of the components of the thermally shrinkable tube heating apparatus 10 is decreased.

In this embodiment, the inlet opening R3b is a flat opening extending in the axis Ax direction of the accommodation space S1. With such a structure, the hot air is sent into the accommodation space S1 in a wide range in the axis Ax direction of the accommodation space S1. As a result, the hot air is allowed to hit a wide range of the thermally shrinkable tube 5 at the same time. Therefore, the thermally shrinkable tube 5 is heated highly efficiently and uniformly.

In this embodiment, the first outlet opening R1a and the first discharge opening R1b are each a flat opening extending in the axis Ax direction of the accommodation space S1. The first discharge flow path R1 is a flat flow path extending in the axis Ax direction. With such a structure, the hot air is discharged efficiently along the axis Ax direction of the accommodation space S1. In this embodiment, the axis Ax direction is a longitudinal direction of the accommodation space S1. Therefore, the thermally shrinkable tube 5 is heated more efficiently. This is also applicable to the second discharge flow path R2.

In addition, in this embodiment, the holding portion 40A includes the plurality of discharge holes 41L7 each running therethrough from the outer surface of the holding portion 40A to the first discharge flow path R1. The plurality of discharge holes 41L7 are aligned in the axis Ax direction of the accommodation space S1. With such a structure, the hot air is discharged more efficiently by the plurality of discharge holes 41L7 assisting the discharge of the hot air. In addition. the plurality of discharge holes 41L7 are aligned in the axis Ax direction, which is the longitudinal direction of the first discharge flow path R1. Therefore, the space efficiency is high. This is also applicable to the plurality of discharge holes 41L7 in communication with the second discharge flow path R2.

In this embodiment, the opening direction of the inlet opening R3b and the opening direction of the first outlet opening R1a are shifted from each other by 90 degrees as seen in the axis Ax direction of the accommodation space S1. In this embodiment, the opening direction of the inlet opening R3b is the up-down direction, and the opening direction of the first outlet opening R1a is the left-right direction. With such a structure, the hot air supplied into the accommodation space S1 and flowing out from the first outlet opening R1a rotates by at least 90 degrees along the outer circumferential surface of the thermally shrinkable tube 5 before flowing out. Therefore, the thermally shrinkable tube 5 is heated uniformly and quickly.

In addition, in this embodiment, regarding the holding portion 40A, the second outlet opening R2a of the second discharge flow path R2 is provided symmetrically to the first outlet opening R1a with respect to the opening direction of the inlet opening R3b. Therefore, the hot air supplied into the accommodation space S1 rotates by at least 180 degrees along the outer circumferential surface of the thermally shrinkable tube 5 before flowing out from the first outlet opening R1a and the second outlet opening R2a. Therefore, the thermally shrinkable tube 5 is heated uniformly and quickly. Particularly in this embodiment, the first outlet opening R1a and the second outlet opening R2a are provided symmetrically to each other. Therefore, the hot air rotates substantially uniformly to the side of the first outlet opening R1a and to the side of the second outlet opening R2a of the thermally shrinkable tube 5. This allows the thermally shrinkable tube 5 to be heated more uniformly.

### [Other embodiments]

Some embodiments of the present invention are described above. The above-described embodiments are merely examples, and the present invention may be carried out in various other embodiments. For example, in the above-described embodiments, the thermally shrinkable tube heating apparatus 10 transports the thermally shrinkable tube 5 to the accommodation space S1, cuts the thermally shrinkable tube 5, and inserts the drain wire 2 into the thermally shrinkable tube 5. These works may be performed by another device or an operator. For example, in the case where the drain wire 2 is inserted into the thermally shrinkable tube 5 by another device or the like, the thermally shrinkable tube heating apparatus 10 does not need to include the moving device 70. In the case where the thermally shrinkable tube heating apparatus 10 does not include the moving device 70, the cool air cooling the accommodation space S1 may be supplied into the accommodation space S1 from an inlet opening other than the supply opening R3a.

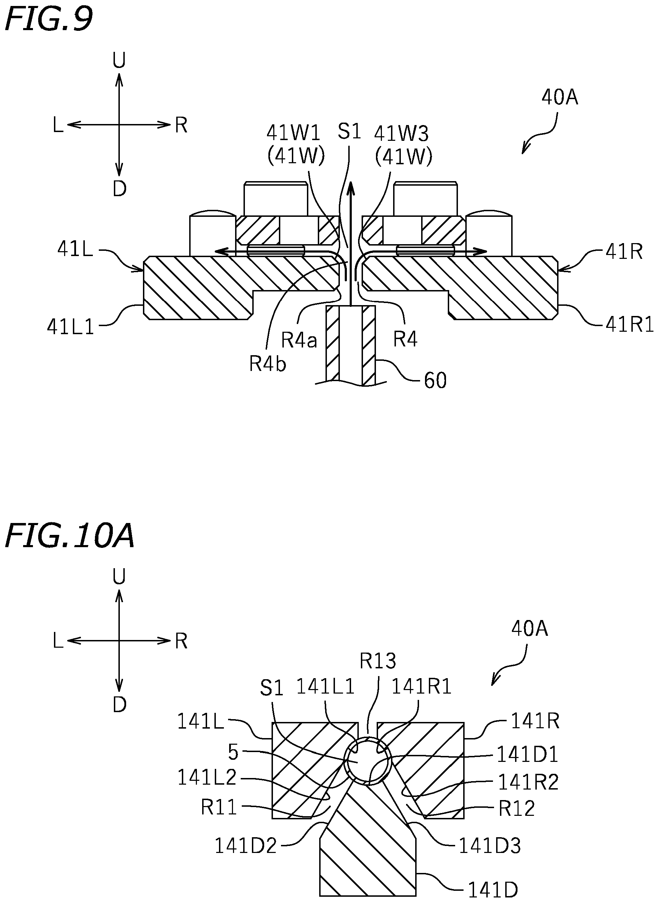

FIG. 9 is a vertical cross-sectional view of the holding portion 40A according to a first modification, in which the cool air from the cool air generation device 60 (represented by the arrow) is supplied into a second supply opening R4a. In the following descriptions of some modifications, elements having the same functions as those in the above-described embodiments will bear the same reference signs therewith regardless of whether such elements are shown in the figure(s) or not. The holding portion 40A shown in FIG. 9 is substantially the same as that described in the above-described embodiments, and includes a gap also between the bottom clamp 41L1 of the left clamp 41L and the bottom clamp 41R1 of the right clamp 41R. In this modification, this gap acts as a second inlet flow path R4. As shown in FIG. 9, the second inlet flow path R4 includes the second supply opening R4a opened to the outside of the holding portion 40A, and also includes a second inlet opening R4b opened so as to cross a part of the wall 41W of the accommodation space S1 (in this modification, so as to cross the first grasping portion 41W1 and the third grasping portion 41W3) and being on the accommodation space S1. The cool air generation device 60 is structured to send the cool air into the second supply opening R4a. For example, in the case where the thermally shrinkable tube heating apparatus 10 does not include the moving device 70, the structure in this modification is simpler and reduces the cost of the thermally shrinkable tube heating apparatus 10.

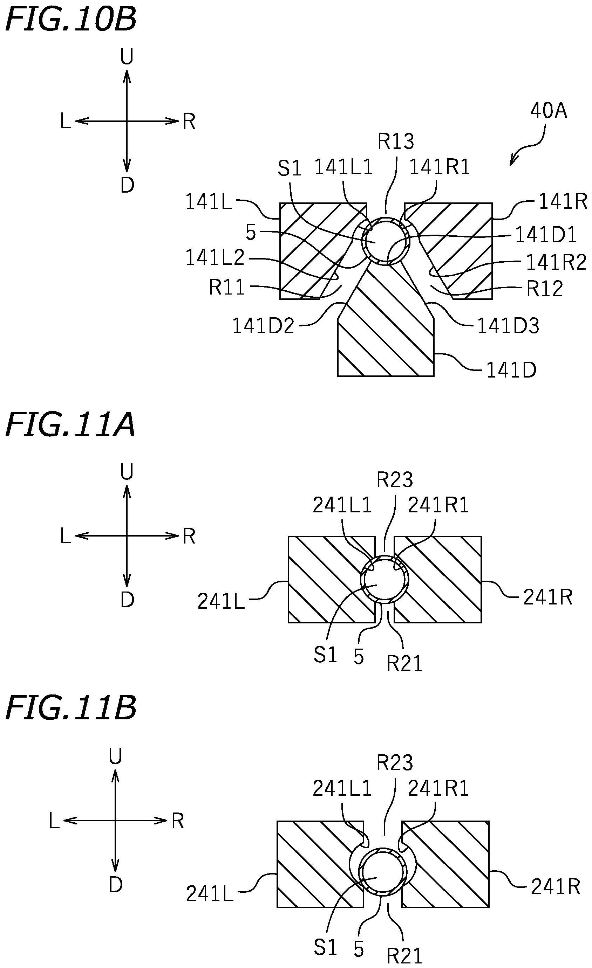

The clamps grasping or releasing the thermally shrinkable tube 5 may have any of various shapes. FIG. 10A through FIG. 11B show some modifications of the shape of the clamps. Among FIG. 10A through FIG. 11B, FIG. 10A and FIG. 11A each show a state where the clamps grasp the thermally shrinkable tube 5, and FIG. 10B and FIG. 11B each show a state where the clamps shown in FIG. 10A and FIG. 11A release the thermally shrinkable tube 5.

As shown in FIG. 10A and FIG. 10B, in a second modification, the holding portion 40A includes a left clamp 141L and a right clamp 141R, and also includes a support member 141D including a secured wall 141D1. The support member 141D is provided below the accommodation space S1, and forms the bottom wall 141D1 of the accommodation space S1. A portion of a right surface of the left clamp 141L that is below a grasping portion 141L1 is an inclining surface 141L2, which is inclined further leftward as extending downward. A left surface 141D2 of the support member 141D is inclined substantially parallel to the inclining surface 141L2. Similarly, a portion of a left surface of the right clamp 141R that is below a grasping portion 141R1 is an inclining surface 141R2, which is inclined further rightward as extending downward. A right surface 141D3 of the support member 141D is inclined substantially parallel to the inclining surface 141R2.

As shown in FIG. 10A and FIG. 10B, a gap between a portion of the left clamp 141L that is above the grasping portion 141L1 and a portion of the right clamp 141R that is above the grasping portion 141R1 acts as an inlet flow path R13. A gap between the inclining surface 141L2 of the left clamp 141L and the left surface 141D2 of the support member 141D acts as a first discharge flow path R11. A gap between the inclining surface 141R2 of the right clamp 141R and the right surface 141D3 of the support member 141D acts as a second discharge flow path R12.

With the above-described structure, the opening direction of an inlet opening of the inlet flow path R13 is shifted by a degree larger than 90 degrees with each of the opening direction of an outlet opening of the first discharge flow path R11 and the opening direction of an outlet opening of the second discharge flow path R12, as seen in the axial direction of the accommodation space S1 (in the direction vertical to the sheet of FIG. 10A and FIG. 10B). Therefore, the hot air rotates around the thermally shrinkable tube 5 more than in the case where the opening direction of the inlet opening and the opening direction of each of the outlet openings are shifted by 90 degrees to each other. As a result, the thermally shrinkable tube 5 may be heated at higher speed and more uniformly.

In a third modification, as shown in FIG. 11A and FIG. 11B, a gap between a portion of a left clamp 241L that is below a grasping portion 241L1 and a portion of a right clamp 241R that is below a grasping portion 241R1 acts as a discharge flow path R21. An inlet flow path R23 is defined by a gap between a portion of the left clamp 242L that is above the grasping portion 241L1 and a portion of the right clamp 241R that is above the grasping portion 241R1. With such a modification, the inlet flow path R23 and the discharge flow path R21 are formed by a very simple structure. The hot air is discharged from the accommodation space S1 by, for example, making the length of the discharge flow path R21 in an axial direction thereof longer than the length of the range in which the thermally shrinkable tube 5 is accommodated. Bottom portions of the left clamp 241L and the right clamp 241R may be, for example, comb teeth-like such that the discharge flow path is not closed by the thermally shrinkable tube 5. When grasping the thermally shrinkable tube 5, the comb teeth-like portions may be meshed with each other. At this point, a gap through which the hot air passes may be formed between the comb teeth-like portions meshed with each other.

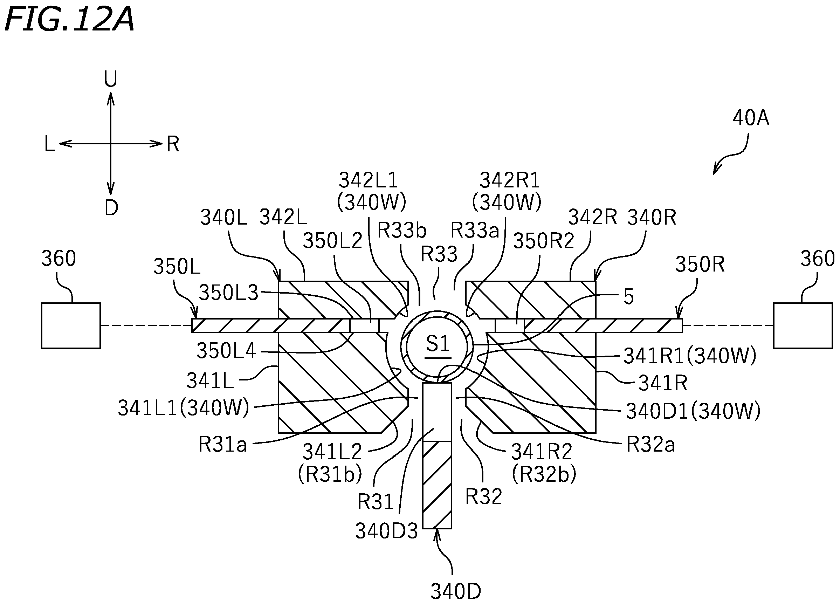

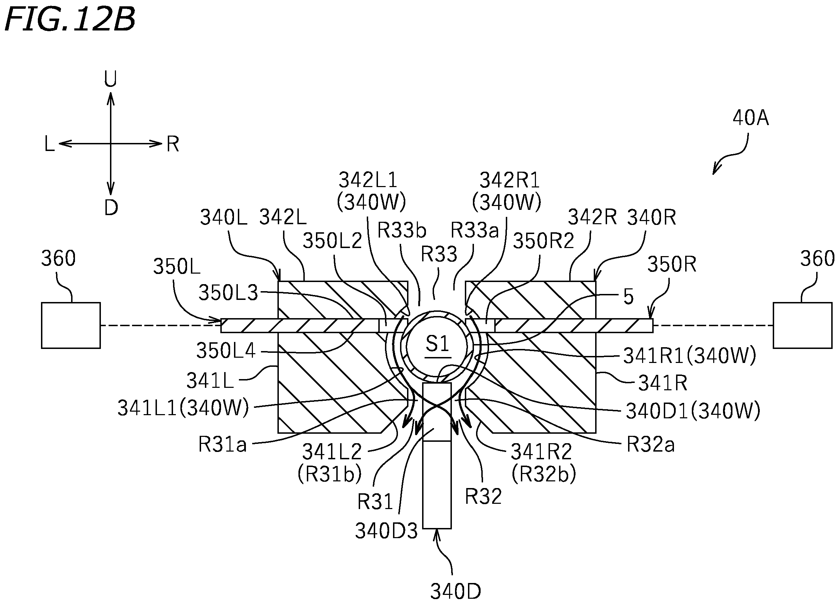

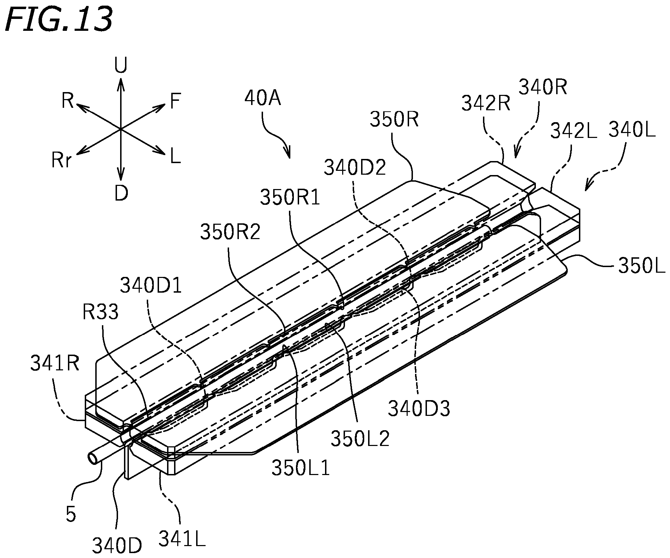

In addition, the tube holding device may be structured such that a movable portion other than the wall forming the accommodation space grasps or releases the thermally shrinkable tube in the accommodation space. FIG. 12A is a vertical cross-sectional view showing a state where the holding portion 40A according to a fourth modification releases the thermally shrinkable tube 5. FIG. 12B is a vertical cross-sectional view showing a state where the holding portion 40A shown in FIG. 12A grasps the thermally shrinkable tube 5. FIG. 13 is a perspective view of the holding portion 40A according to the fourth modification.

As shown in FIG. 12A and FIG. 12B, the holding portion 40A according to the fourth modification includes a left block member 340L, a right block member 340R, a bottom support member 340D, a left holding plate 350L, and a right holding plate 350R. In this modification, the left block member 340L, the right block member 340R and the bottom support member 340D define the accommodation space S1, but do not move in the radial direction of the accommodation space S1. The left holding plate 350L and the right holding plate 350R are each structured to be inserted into the accommodation space S1 and to contact the thermally shrinkable tube 5 accommodated in the accommodation space S1. In FIG. 13, the left block member 340L and the right block member 340R are removed, and are represented by the two-dot chain line.

As shown in FIG. 12A, the left block member 340L includes a bottom member 341L and a top member 342L. The top member 342L is located above the bottom member 341L, and a gap in which the left holding plate 350L is located is formed between the bottom member 341L and the top member 342L. As shown in FIG. 13, the bottom member 341L and the top member 342L extend in the front-rear direction. Therefore, the gap between the bottom member 341L and the top member 342L also extends in the front-rear direction.

As shown in FIG. 12A, a curved portion 341L1 recessed in an arcked shape as seen in the front-rear direction is formed at a right top corner of the bottom member 341L. The curved portion 341L1 extends in the front-rear direction. A chamfered portion 342L1 is formed at a right bottom corner of the top member 342L. The chamfered portion 342L1 also extends in the front-rear direction. The curved portion 341L1 and the chamfered portion 342L1 form a left side of a wall 340W of the accommodation space S1. A chamfered portion 341L2 is formed at a right bottom corner of the bottom member 341L.

The right block member 340R is structured to be left-right-symmetrical to the left block member 340L. A gap is formed between a bottom member 341R and a top member 342R of the right block member 340R. The right holding plate 350R is located in this gap. The bottom member 341R and the top member 342R of the right block member 340R respectively include a curved portion 341R1 and a chamfered portion 342R1. The curved portion 341R1 and the chamfered portion 342R1 form a right side of the wall 340W of the accommodation space S1. A chamfered portion 341R2 is formed at a left bottom corner of the bottom member 341R of the right block member 340R. The left block member 340L and the right block member 340R are provided to be separated from each other in the left-right direction, and face each other.

The bottom support member 340D forms a bottom portion of the wall 340W of the accommodation space S1. The bottom support member 340D is provided between the left block member 340L and the right block member 340R, and below the curved portion 341L1 of the left block member 340L and the curved portion 341R1 of the right block member 340R. As shown in FIG. 13, the bottom support member 340D is a flat plate-like member extending in the up-down direction and in the front-rear direction. As shown in FIG. 12A, a top end 340D1 of the bottom support member 340D form a bottom portion of the wall 340W.

As shown in FIG. 13, the top end 340D1 of the bottom support member 340D is formed to be comb teeth-like. At the top end 340D1 of the bottom support member 340D, a plurality of protrusions 340D2 aligned in the front-rear direction and cutout portions 340D3 provided between adjacent ones of the protrusions 340D2 are provided. The plurality of protrusions 340D2 are each formed to be a substantial triangle having one top apex as seen in the left-right direction. A front inclining side of the substantial triangle (on the side of the tube transportation device 20) is inclined more mildly than a rear inclining side of the substantial triangle.

As shown in FIG. 12A, in a state where the thermally shrinkable tube 5 is placed on the comb teeth-like top end 340D1 of the bottom support member 340D in a straight manner (that is, without being inclined in the left-right direction), a gap is formed between the thermally shrinkable tube 5 and the left block member 340L. This gap acts as a flow path for the hot air. Similarly, a gap is formed between the thermally shrinkable tube 5 and the right block member 340R. This gap also acts as a flow path for the hot air.

A gap between the top member 342L of the left block member 340L and the top member 342R of the right block member 340R forms an inlet flow path R33. A gap between the bottom member 341L of the left block member 340L and the bottom support member 340D forms a first discharge flow path R31. A gap between the bottom member 341R of the right block member 340R and the bottom support member 340D forms a second discharge flow path R32. Discharge openings R31b and R32b formed at bottom ends of the first discharge flow path R31 and the second discharge flow R32 each have an area larger than an area of a portion thereabove because of the chamfered portions 341L2 and 341R2. As a result, the discharge of the hot air and the cool air from the accommodation space S1 is promoted. The first discharge flow path R31 and the second discharge flow R32 are in communication with each other via a cutout portion 340D3 provided in the bottom support member 340D partitioning the first discharge flow path R31 and the second discharge flow R32 from each other.

As shown in FIG. 12A and FIG. 12B, the left holding plate 350L is movable in the left-right direction along the gap between the bottom member 341L and the top member 342L. As shown in FIG. 13, the left holding plate 350L is a flat plate-like member extending in the front-rear direction and in the left-right direction. As shown in FIG. 12B, the left holding plate 350L is inserted into the accommodation space S1 so as to partition an inlet opening R33b and a first outlet opening R31a from each other. In this modification, a right end of the left holding plate 350L (the end on the side of the accommodation space S1) is also comb teeth-like. As shown in FIG. 13, at the right end of the left holding plate 350L, protrusions 350L1 aligned in the front-rear direction and each extending rightward and cutout portions 350L2 formed between adjacent ones of the protrusions 350L1 are provided. The plurality of protrusions 350L1 are each formed to be a substantial triangle having one right apex as seen in the up-down direction.

The cutout portions 350L2 allow an area on the side of the inlet opening R33b with respect to the left holding plate 350L and an area on the side of the first outlet opening R31a with respect to the left holding plate 350L to communicate with each other. Among surfaces of the left holding plate 350L, a top surface 350L3 is directed toward the inlet opening R33b. Among the surfaces of the left holding plate 350L, a bottom surface 350L4 is directed toward the first outlet opening R31a. The cutout portions 350L2 run through the left holding plate 350L between the top surface 350L3 and the bottom surface 350L4.

The right holding plate 350R is structured to be left-right-symmetrical to the left holding plate 350L. As shown in FIG. 13, at a left end of the right holding plate 350R, substantially triangular protrusions 350R1 aligned in the front-rear direction and each extending leftward and cutout portions 350R2 formed between adjacent ones of the protrusions 350R1 are provided. As shown in FIG. 12A and FIG. 12B, the right holding plate 350R is also movable in the left-right direction along the gap between the bottom member 341R and the top member 342R of the right block member 340R. The right holding plate 350R is inserted into the accommodation space S1 so as to partition the inlet opening R33b and a second outlet opening R32a from each other. The cutout portions 350R2 of the right holding plate 350R allow an area on the side of the inlet opening R33b with respect to the right holding plate 350R and an area on the side of the second outlet opening R32a with respect to the right holding plate 350R to communicate with each other.

The thermally shrinkable tube heating apparatus 10 according to this modification includes a holding plate driving device 360 inserting the left holding plate 350L and the right holding plate 350R into the accommodation space S1 and putting the left holding plate 350L and the right holding plate 350R into contact with the thermally shrinkable tube 5 accommodated in the accommodation space S1. The holding plate driving device 360 also retracts the left holding plate 350L and the right holding plate 350R from the accommodation space S1. There is no specific limitation on the structure of the holding plate driving device 360. As the holding plate driving device 360, an air cylinder, a motor or the like is preferably usable. The holding plate driving device 360 may or may not cause the left holding plate 350L and the right holding plate 350R to grasp the thermally shrinkable tube 5. That is, the holding plate driving device 360 may merely cause the left holding plate 350L and the right holding plate 350R to contact the thermally shrinkable tube 5. It is sufficient that the left holding plate 350L and the right holding plate 350R are structured to prevent, together with the wall (in this modification, together with the top end 340D1 of the bottom support member 340D). the thermally shrinkable tube 5 from being moved by the hot air.

In this modification, while the thermally shrinkable tube 5 is transported to the accommodation space S1, the left holding plate 350L and the right holding plate 350R are retracted from the accommodation space S1 such that a situation does not occur where the thermally shrinkable tube 5 is stuck with the comb teeth-like portions and thus the transportation thereof is prevented. The front inclining side of each of the plurality of protrusions 340D2 of the bottom support member 340D is set to be mildly inclined such that the thermally shrinkable tube 5 is not easily stuck with the protrusions 340D2 while being transported to the accommodation space S1. The left holding plate 350L and the right holding plate 350R are inserted into the accommodation space S1 before the hot air is blown into a supply opening R33a. This allows, as shown in FIG. 12B, the thermally shrinkable tube 5 to be held without being inclined left or right. As a result, the hot air flow path between the thermally shrinkable tube 5 and the left block member 340L and the hot air flow path between the thermally shrinkable tube 5 and the right block member 340R are provided with certainty.

The left holding plate 350L and the right holding plate 350R partition the above-mentioned hot air flow paths in the up-down direction while being in contact with the thermally shrinkable tube 5. However, the left holding plate 350L and the right holding plate 350R respectively include the cutout portions 350L2 and 350R2 that allow portions of the hot air flow paths that are above the left holding plate 350L and the right holding plate 350R and portions of the hot air flow paths that are below the left holding plate 350L and the right holding plate 350R to communicate with each other. Therefore, as represented by the arrows in FIG. 12B, the hot air passes through the cutout portions 350L2 and 350R2 to flow into the first discharge flow path R31 and the second discharge flow path R32. As a result, the hot air easily flows along the outer circumferential surface of the thermally shrinkable tube 5, and the heating efficiency and the uniformity of heating of the thermally shrinkable tube 5 are improved.

In addition, in this modification, the cutout portion 340D3 of the bottom support member 340D allows the first discharge flow path R31 and the second discharge flow path R32 to communicate with each other. As a result, as represented by the arrows in FIG. 12B, the hot air or the cool air flows to the opposite discharge flow paths beyond the bottom support member 340D. Thus, the discharge of the hot air or the cool air is promoted.

As described above, with the thermally shrinkable tube heating apparatus 10 according to the fourth modification, the holding plates 350L and 350R, which contact the thermally shrinkable tube 5 when the thermally shrinkable tube 5 is inserted into the accommodation space S1, hold the thermally shrinkable tube 5 at a predetermined position in the accommodation space S1, and the flow paths allowing the inlet opening R33b and each of the outlet openings R31a and R32a to communicate with each other are formed by the cutout portions 350L2 and 350R2 of the holding plates 350L and 350R. Therefore, the thermally shrinkable tube 5 is held at a predetermined position in the accommodation space S1, and the hot air flows in the accommodation space S1. Thus, the heating efficiency of the thermally shrinkable tube 5 is improved.

The number of the holding plate(s) to be inserted into the accommodation space S1 or the number of the insertion member(s) provided instead of the holding plate(s) is not limited to two, and may be one, or three or more. The element that is formed in the insertion member and allows the inlet side and the outlet side of the insertion member to communicate with each other is not limited to a protrusion or a cutout portion, and may be one or a plurality of through-holes. The element may be a combination of protrusions and cutout portions with through-holes.

The above-described embodiments do not limit the present invention unless otherwise specified. For example, the wall of the accommodation space does not need to be divided into a plurality of parts, and may be one wall that is continuous in the entire circumference thereof. In this case, the inlet opening and the outlet opening may be a hole (or a plurality of holes), a slit or the like formed in the wall. A groove may be formed in the wall, so that the hot air or the cool air flows into the outlet opening through the groove.

### Reference Signs List

- 2: Drain wire (electric wire)
- 5: Thermally shrinkable tube
- 10: Thermally shrinkable tube heating apparatus
- 40: Tube holding device
- 40A: Holding portion (holding member)
- 40B: Driving mechanism (driving device)
- 41L: Left clamp (clamp member)
- 41L7: Discharge hole
- 41R: Right clamp (clamp member)
- 41R7: Discharge hole
- 41W: Wall
- 41W1 through 41W4: First through fourth grasping portions (parts of the wall)
- 50: Hot air generation device
- 60: Cool air generation device
- 70: Moving device (switch device)
- 90: Control device
- 350L: Left holding plate (insertion member)
- 350L2: Cutout portion (cutout)
- 350R: Right holding plate (insertion member)
- 350R2: Cutout portion (cutout)
- 360: Holding plate driving device (insertion member driving device)
- Ax: Axis of the accommodation space (axis)
- R1: First discharge flow path (discharge flow path)
- R1a: First outlet opening (outlet opening)
- R1b: First discharge opening (discharge opening)
- R2: Second discharge flow path
- R2a: Second outlet opening
- R2b: Second discharge opening
- R3: Inlet flow path
- R3a: Supply opening
- R3b: Inlet opening
- S1: Accommodation space

## Claims

1. A thermally shrinkable tube heating apparatus (10), comprising:
a holding member (40A) including an accommodation space (S1) capable of accommodating a thermally shrinkable tube (5) and being capable of grasping the thermally shrinkable tube (5) accommodated in the accommodation space (S1); and
a hot air generation device (50) generating hot air, wherein:
the holding member (40A) includes:
a wall (41W) provided around a predetermined axis (Ax), extending in an axial direction of the axis (Ax), and forming the accommodation space (S1) inner thereto,
an inlet flow path (R3) including a supply opening (R3a) opened to an outer surface of the holding member (40A) and an inlet opening (R3b) opened to the wall (41W), and
a discharge flow path (R1) including an outlet opening (R1a) opened to the wall (41W) and a discharge opening (R1b) opened to the outer surface of the holding member (40A), and
the hot air generation device (50) sends the hot air into the supply opening (R3a),
**characterized in that**
the holding member (40A) includes a plurality of clamp members (41L, 41R) each including a part of the wall (41W),
the thermally shrinkable tube heating apparatus (10) further includes:
a driving device (40B) driving the plurality of clamp members (41L, 41R) in a radial direction of the accommodation space (S1) to cause the plurality of clamp members (41L, 41R) to grasp or release the thermally shrinkable tube (5) accommodated in the accommodation space (S1).

2. The thermally shrinkable tube heating apparatus (10) according to claim 1, further including
a moving device (70) moving at least one of an electric wire (2) to be inserted into the thermally shrinkable tube (5) and the holding member (40A) in the axial direction to insert the electric wire (2) into the thermally shrinkable tube (5) accommodated in the accommodation space (S1), and
a control device (90) controlling the hot air generation device (50), the driving device (40B) and the moving device (70), and wherein
the control device (90) is configured:
to control the driving device (40B) to cause the plurality of clamp members (41L, 41R) to grasp the thermally shrinkable tube (5) and to control the moving device (70) to insert the electric wire (2) into the thermally shrinkable tube (5) in the state where the plurality of clamp members (41L, 41R) grasp the thermally shrinkable tube (5), and
to control, after the electric wire (2) is inserted into the thermally shrinkable tube (5), the driving device (40B) to cause the plurality of clamp members (41L, 41R) to release the thermally shrinkable tube (5), and further to control the hot air generation device (50) to send the hot air into the supply opening (R3a).

3. The thermally shrinkable tube heating apparatus (10) according to claim 2, wherein:
the plurality of clamp members (41L,41R) are, in at least the state of releasing the thermally shrinkable tube (5), separated from each other to form a gap, and
the gap forms at least one of the inlet flow path (R3) and the discharge flow path (R1).

4. The thermally shrinkable tube heating apparatus (10) according to any one of claims 1 through 3, wherein:
the hot air generation device (50) includes an hot air outlet (52b1), through which the hot air is blown out, and
the thermally shrinkable tube heating apparatus (10) further includes:
a cool air generation device (60) including a cool air outlet (61a), through which cool air is blown out, and
a switch device (70) capable of moving at least one of the hot air generation device (50), the cool air generation device (60) and the holding member (40A) to cause the hot air outlet (52b1) or the cool air outlet (61a) to face the supply opening (R3a).

5. The thermally shrinkable tube heating apparatus (10) according to any one of claims 1 through 3, further comprising a cool air generation device (60) generating cool air,
wherein:
the holding member (40A) includes a second inlet flow path (R4) including a second supply opening (R4a) opened to the outer surface of the holding member (40A) and a second inlet opening (R4b) opened to the wall (41W), and
the cool air generation device (60) sends the cool air into the second supply opening (R4a).

6. The thermally shrinkable tube heating apparatus (10) according to any one of claims 1 through 5, wherein the inlet opening (R3b) is a flat opening extending in the axial direction.

7. The thermally shrinkable tube heating apparatus (10) according to any one of claims 1 through 6, wherein:
the outlet opening (R1a) and the discharge opening (R1b) are each a flat opening extending in the axial direction, and
the discharge flow path (R1) is a flat flow path extending in the axial direction.

8. The thermally shrinkable tube heating apparatus (10) according to any one of claims 1 through 7, wherein:
the holding member (40A) includes a plurality of discharge holes (41L7, 41R7) each running therethrough from the outer surface of the holding member (40A) to the discharge flow path (R1), and
the plurality of discharge holes (41L7, 41R7) are aligned in the axial direction.

9. The thermally shrinkable tube heating apparatus (10) according to any one of claims 1 through 8, wherein the axial direction is a longitudinal direction of the thermally shrinkable tube (5); and as seen in the axial direction, an opening direction of the inlet opening (R3b) and an opening direction of the outlet opening (R1a) are shifted from each other by at least 90 degrees.

10. The thermally shrinkable tube heating apparatus (10) according to claim 9, wherein the holding member (40A) includes a second discharge flow path (R2) including a second outlet opening (R2a) provided symmetrically to the outlet opening (R1a) with respect to the opening direction of the inlet opening (R3b) and a second discharge opening (R2b) opened to the outer surface of the holding member (40A).

11. The thermally shrinkable tube heating apparatus (10) according to any one of claims 1 through 10, further comprising:
an insertion member (350L, 350R) to be inserted into the accommodation space (S1) so as to partition the inlet opening (R3b) and the outlet opening (R1a) from each other, and
an insertion member driving device (360) inserting the insertion member (350L, 350R) into the accommodation space (S1) to put the insertion member (350L, 350R) into contact with the thermally shrinkable tube (5) accommodated in the accommodation space (S1), or retracting the insertion member (350L, 350R) from the accommodation space (S1),
wherein the insertion member (350L, 350R) includes a cutout (350L2, 350R2) or a through-hole causing an area on the side of the inlet opening (R3b) with respect to the insertion member (350L, 350R) and an area on the side of the outlet opening (R1a) with respect to the insertion member (350L, 350R) to communicate with each other.

## Patentansprüche

1. Eine Wärmeschrumpfschlauch-Heizvorrichtung (10), umfassend:
ein Halteelement (40A), das einen Aufnahmeraum (S1) enthält, der einen Wärmeschrumpfschlauch (5) aufnehmen kann und in der Lage ist, den in dem Aufnahmeraum (S1) aufgenommenen Wärmeschrumpfschlauch (5) zu ergreifen; und
eine Heißlufterzeugungsvorrichtung (50), die Heißluft erzeugt, wobei:
das Halteelement (40A) umfasst:
eine Wand (41W), die um eine vorbestimmte Achse (Ax) herum angeordnet ist, sich in einer axialen Richtung der Achse (Ax) erstreckt und den Aufnahmeraum (S1) im Inneren davon bildet
einen Einlassströmungsweg (R3) mit einer Zufuhröffnung (R3a), die zu einer Außenfläche des Halteelements (40A) geöffnet ist, und einer Einlassöffnung (R3b), die zu der Wand (41W) geöffnet ist, und
einen Auslassströmungsweg (R1) mit einer Auslassöffnung (R1a), die zu der Wand (41W) hin geöffnet ist, und einer Auslassöffnung (R1b), die zu der Außenfläche des Halteelements (40A) hin geöffnet ist, und
die Heißlufterzeugungsvorrichtung (50) die Heißluft in die Zufuhröffnung (R3a) leitet,
**gekennzeichnet dadurch, dass**
das Halteelement (40A) eine Vielzahl von Klemmelementen (41L, 41R) enthält, die jeweils einen Teil der Wand (41W) umfassen,
die Heizvorrichtung für einen Wärmeschrumpfschlauch (10) ferner umfasst:
eine Antriebsvorrichtung (40B), die die mehreren Klemmelemente (41L, 41R) in einer radialen Richtung des Aufnahmeraums (S1) antreibt, um zu bewirken, dass die mehreren Klemmelemente (41L, 41R) den in dem Aufnahmeraum (S1) aufgenommenen Wärmeschrumpfschlauch (5) ergreifen oder freigeben.

2. Die Wärmeschrumpfschlauch-Heizvorrichtung (10) gemäß Anspruch 1, des Weiteren umfassend
eine Antriebsvorrichtung, die die Vielzahl von Klemmelementen in einer radialen Richtung des Aufnahmeraums antreibt, um zu bewirken, dass die Vielzahl von Klemmelementen den in dem Aufnahmeraum untergebrachten Wärmeschrumpfschlauch ergreift oder löst,
eine Bewegungsvorrichtung (70), die einen in den Wärmeschrumpfschlauch (5) einzuführenden elektrischen Draht (2) und/oder das Halteelement (40A) in der axialen Richtung bewegt, um den elektrischen Draht (2) in den in dem Aufnahmeraum (S1) untergebrachten Wärmeschrumpfschlauch (5) einzuführen, und
eine Steuervorrichtung (90), die die Heißlufterzeugungsvorrichtung (50), die Antriebsvorrichtung (40B) und die Bewegungsvorrichtung (70) steuert, und wobei
die Steuervorrichtung (90) konfiguriert ist:
die Antriebsvorrichtung (40B) zu steuern, um zu bewirken, dass die mehreren Klemmelemente (41L, 41R) den Wärmeschrumpfschlauch (5) ergreifen, und die Bewegungsvorrichtung (70) zu steuern, um den elektrischen Draht (2) in den Wärmeschrumpfschlauch (5) in dem Zustand einzuführen, in dem die mehreren Klemmelemente (41L, 41R) den Wärmeschrumpfschlauch (5) ergreifen, und
nach dem Einführen des elektrischen Drahtes (2) in den Wärmeschrumpfschlauch (5) die Antriebsvorrichtung (40B) zu steuern, um zu bewirken, dass die mehreren Klemmelemente (41L, 41R) den Wärmeschrumpfschlauch (5) freigeben, und ferner die Heißlufterzeugungsvorrichtung (50) zu steuern, um die Heißluft in die Zufuhröffnung (R3a) zu senden.

3. Die Wärmeschrumpfschlauch-Heizvorrichtung (10) gemäß Anspruch 2, wobei:
die mehreren Klemmelemente (41L, 41R) zumindest im Zustand der Freigabe des Wärmeschrumpfschlauchs (5) voneinander getrennt sind, um einen Spalt zu bilden, und
der Spalt mindestens einen von dem Einlassströmungsweg (R3) und dem Auslassströmungsweg (R1) bildet.

4. Die Wärmeschrumpfschlauch-Heizvorrichtung (10) gemäß einem der Ansprüche 1 bis 3, wobei:
die Heißlufterzeugungsvorrichtung (50) einen Heißluftauslass (52b1) aufweist, durch den die Heißluft ausgeblasen wird, und
die Wärmeschrumpfschlauch-Heizvorrichtung (10) ferner umfasst:
eine Kühllufterzeugungsvorrichtung (60) mit einem Kühlluftauslass (61a), durch den Kühlluft ausgeblasen wird, und
eine Schaltvorrichtung (70), die in der Lage ist, mindestens eines von der Heißlufterzeugungsvorrichtung (50), der Kühllufterzeugungsvorrichtung (60) und dem Halteelement (40A) zu bewegen, um zu bewirken, dass der Heißluftauslass (52b1) oder der Kühlluftauslass (61a) der Zufuhröffnung (R3a) gegenüberliegt.

5. Die Wärmeschrumpfschlauch-Heizvorrichtung (10) gemäß einem der Ansprüche 1 bis 3, des Weiteren umfassend
eine Kühllufterzeugungsvorrichtung (60), die Kühlluft erzeugt, wobei:
das Halteelement (40A) einen zweiten Einlassströmungsweg (R4) aufweist, der eine zweite Zufuhröffnung (R4a), die zur Außenfläche des Halteelements (40A) hin geöffnet ist, und eine zweite Einlassöffnung (R4b), die zur Wand (41W) hin geöffnet ist, umfasst, und
die Kühllufterzeugungsvorrichtung (60) die Kühlluft in die zweite Zufuhröffnung (R4a) leitet.

6. Die Wärmeschrumpfschlauch-Heizvorrichtung (10) gemäß einem der Ansprüche 1 bis 5, wobei
die Einlassöffnung (R3b) eine flache Öffnung ist, die sich in axialer Richtung erstreckt.

7. Die Wärmeschrumpfschlauch-Heizvorrichtung (10) gemäß einem der Ansprüche 1 bis 6, wobei:
die Auslassöffnung (R1a) und die Auslassöffnung (R1b) jeweils eine flache, sich in axialer Richtung erstreckende Öffnung sind, und
der Auslassströmungsweg (R1) ein flacher Strömungsweg ist, der sich in der axialen Richtung erstreckt.

8. Die Wärmeschrumpfschlauch-Heizvorrichtung (10) gemäß einem der Ansprüche 1 bis 7, wobei:
das Halteelement (40A) eine Vielzahl von Auslasslöchern (41L7, 41R7) aufweist, die jeweils von der Außenfläche des Halteelements (40A) zum Auslassströmungsweg (R1) durch dieses hindurch verlaufen, und
die Mehrzahl der Auslasslöcher (41L7, 41R7) in der axialen Richtung ausgerichtet sind.

9. Die Wärmeschrumpfschlauch-Heizvorrichtung (10) gemäß einem der Ansprüche 1 bis 8, wobei
die axiale Richtung eine Längsrichtung des Wärmeschrumpfschlauchs (5) ist; und in der axialen Richtung gesehen eine Öffnungsrichtung der Einlassöffnung (R3b) und eine Öffnungsrichtung der Auslassöffnung (R1a) um mindestens 90 Grad gegeneinander verschoben sind.

10. Die Wärmeschrumpfschlauch-Heizvorrichtung (10) gemäß Anspruch 9, wobei
das Halteelement (40A) einen zweiten Auslassströmungsweg (R2) aufweist, der eine zweite Auslassöffnung (R2a), die symmetrisch zur Auslassöffnung (R1a) in Bezug auf die Öffnungsrichtung der Einlassöffnung (R3b) angeordnet ist, und eine zweite Auslassöffnung (R2b) umfasst, die zur Außenfläche des Halteelements (40A) hin geöffnet ist.

11. Die Wärmeschrumpfschlauch-Heizvorrichtung (10) gemäß einem der Ansprüche 1 bis 10, des Weiteren umfassend:
ein Einführelement (350L, 350R), das in den Aufnahmeraum (S1) einzuführen ist, um die Einlassöffnung (R3b) und die Auslassöffnung (R1a) voneinander zu trennen, und
eine Einführelement-Antriebsvorrichtung (360), die das Einführelement (350L, 350R) in den Aufnahmeraum (S1) einführt, um das Einführelement (350L, 350R) in Kontakt mit dem in dem Aufnahmeraum (S1) untergebrachten Wärmeschrumpfschlauch (5) zu bringen, oder das Einführelement (350L, 350R) aus dem Aufnahmeraum (S1) zurückzieht, wobei
das Einführelement (350L, 350R) einen Ausschnitt (350L2, 350R2) oder ein Durchgangsloch aufweist, wodurch ein Bereich auf der Seite der Einlassöffnung (R3b) in Bezug auf das Einführelement (350L, 350R) und ein Bereich auf der Seite der Auslassöffnung (R1a) in Bezug auf das Einführelement (350L, 350R) miteinander in Verbindung stehen.

## Revendications

1. Appareil de chauffage de tube thermorétractable (10), comprenant :
un élément de maintien (40A) comportant un espace de logement (S1) capable de loger un tube thermorétractable (5) et capable de saisir le tube thermorétractable (5) logé dans l'espace de logement (S1) ; et
un dispositif de génération d'air chaud (50) générant de l'air chaud, dans lequel :
l'élément de maintien (40A) comporte :
une paroi (41W) disposée autour d'un axe prédéterminé (Ax), s'étendant dans une direction axiale de l'axe (Ax), et formant l'espace de logement (S1) à l'intérieur de celle-ci,
un trajet d'écoulement d'entrée (R3) comportant une ouverture d'alimentation (R3a) ouverte sur une surface extérieure de l'élément de maintien (40A) et une ouverture d'entrée (R3b) ouverte sur la paroi (41W), et
un trajet d'écoulement d'évacuation (R1) comportant une ouverture de sortie (R1a) ouverte sur la paroi (41W) et une ouverture d'évacuation (R1b) ouverte sur la surface extérieure de l'élément de maintien (40A), et
le dispositif de génération d'air chaud (50) envoie l'air chaud dans l'ouverture d'alimentation (R3a)
**caractérisé en ce que**
l'élément de maintien (40A) comporte une pluralité d'éléments de serrage (41L, 41R) comportant chacun une partie de la paroi (41W),
l'appareil de chauffage de tube thermorétractable (10) comporte en outre :
un dispositif d'entraînement (40B) entraînant la pluralité d'éléments de serrage (41L, 41R) dans une direction radiale de l'espace de logement (S1) pour amener la pluralité d'éléments de serrage (41L, 41R) à saisir ou à relâcher le tube thermorétractable (5) logé dans l'espace de logement (S1).

2. Appareil de chauffage de tube thermorétractable (10) selon la revendication 1, comportant en outre
un dispositif de déplacement (70) déplaçant au moins l'un d'un fil électrique (2) à insérer dans le tube thermorétractable (5) et de l'élément de maintien (40A) dans la direction axiale pour insérer le fil électrique (2) dans le tube thermorétractable (5) logé dans l'espace de logement (S1), et
un dispositif de commande (90) commandant le dispositif de génération d'air chaud (50), le dispositif d'entraînement (40B) et le dispositif de déplacement (70), et dans lequel
le dispositif de commande (90) est configuré :
pour commander le dispositif d'entraînement (40B) pour amener la pluralité d'éléments de serrage (41L, 41R) à saisir le tube thermorétractable (5) et pour commander le dispositif de déplacement (70) pour insérer le fil électrique (2) dans le tube thermorétractable (5) dans l'état où la pluralité d'éléments de serrage (41L, 41R) saisissent le tube thermorétractable (5), et
pour commander, après que le fil électrique (2) est inséré dans le tube thermorétractable (5), le dispositif d'entraînement (40B) pour amener la pluralité d'éléments de serrage (41L, 41R) à relâcher le tube thermorétractable (5), et en outre pour commander le dispositif de génération d'air chaud (50) pour envoyer l'air chaud dans l'ouverture d'alimentation (R3a).

3. Appareil de chauffage de tube thermorétractable (10) selon la revendication 2, dans lequel :
la pluralité d'éléments de serrage (41L, 41R) sont, au moins dans l'état de relâchement du tube thermorétractable (5), séparés les uns des autres pour former un espace, et
l'espace forme au moins l'un du trajet d'écoulement d'entrée (R3) et du trajet d'écoulement d'évacuation (R1).

4. Appareil de chauffage de tube thermorétractable (10) selon l'une quelconque des revendications 1 à 3, dans lequel :
le dispositif de génération d'air chaud (50) comporte une sortie d'air chaud (52b1), à travers laquelle l'air chaud est soufflé, et
l'appareil de chauffage de tube thermorétractable (10) comporte en outre :
un dispositif de génération d'air frais (60) comportant une sortie d'air frais (61a), à travers laquelle de l'air frais est soufflé, et
un dispositif de commutation (70) capable de déplacer au moins l'un du dispositif de génération d'air chaud (50), du dispositif de génération d'air frais (60) et de l'élément de maintien (40A) pour amener la sortie d'air chaud (52b1) ou la sortie d'air frais (61a) à faire face à l'ouverture d'alimentation (R3a).

5. Appareil de chauffage de tube thermorétractable (10) selon l'une quelconque des revendications 1 à 3, comprenant en outre un dispositif de génération d'air frais (60) générant de l'air frais,
dans lequel :
l'élément de maintien (40A) comporte un second trajet d'écoulement d'entrée (R4) comportant une seconde ouverture d'alimentation (R4a) ouverte sur la surface extérieure de l'élément de maintien (40A) et une seconde ouverture d'entrée (R4b) ouverte sur la paroi (41W), et
le dispositif de génération d'air frais (60) envoie l'air frais dans la seconde ouverture d'alimentation (R4a).

6. Appareil de chauffage de tube thermorétractable (10) selon l'une quelconque des revendications 1 à 5, dans lequel l'ouverture d'entrée (R3b) est une ouverture plate s'étendant dans la direction axiale.

7. Appareil de chauffage de tube thermorétractable (10) selon l'une quelconque des revendications 1 à 6, dans lequel :
l'ouverture de sortie (R1a) et l'ouverture d'évacuation (R1b) sont chacune une ouverture plate s'étendant dans la direction axiale, et
le trajet d'écoulement d'évacuation (R1) est un trajet d'écoulement plat s'étendant dans la direction axiale.

8. Appareil de chauffage de tube thermorétractable (10) selon l'une quelconque des revendications 1 à 7, dans lequel :
l'élément de maintien (40A) comporte une pluralité de trous d'évacuation (41L7, 41R7) s'étendant chacun à travers celui-ci depuis la surface extérieure de l'élément de maintien (40A) jusqu'au trajet d'écoulement d'évacuation (R1), et
la pluralité de trous d'évacuation (41L7, 41R7) sont alignés dans la direction axiale.

9. Appareil de chauffage de tube thermorétractable (10) selon l'une quelconque des revendications 1 à 8, dans lequel la direction axiale est une direction longitudinale du tube thermorétractable (5) ; et comme observé dans la direction axiale, une direction d'ouverture de l'ouverture d'entrée (R3b) et une direction d'ouverture de l'ouverture de sortie (R1a) sont décalées l'une par rapport à l'autre d'au moins 90 degrés.

10. Appareil de chauffage de tube thermorétractable (10) selon la revendication 9, dans lequel l'élément de maintien (40A) comporte un second trajet d'écoulement d'évacuation (R2) comportant une seconde ouverture de sortie (R2a) disposée symétriquement à l'ouverture de sortie (R1a) par rapport à la direction d'ouverture de l'ouverture d'entrée (R3b) et une seconde ouverture d'évacuation (R2b) ouverte sur la surface extérieure de l'élément de maintien (40A).

11. Appareil de chauffage de tube thermorétractable (10) selon l'une quelconque des revendications 1 à 10, comprenant en outre :
un élément d'insertion (350L, 350R) à insérer dans l'espace de logement (S1) de manière à séparer l'ouverture d'entrée (R3b) et l'ouverture de sortie (R1a) l'une de l'autre, et
un dispositif d'entraînement d'élément d'insertion (360) insérant l'élément d'insertion (350L, 350R) dans l'espace de logement (S1) pour mettre l'élément d'insertion (350L, 350R) en contact avec le tube thermorétractable (5) logé dans l'espace de logement (S1), ou rétractant l'élément d'insertion (350L, 350R) depuis l'espace de logement (S1),
dans lequel l'élément d'insertion (350L, 350R) comporte une découpe (350L2, 350R2) ou un trou traversant amenant une zone sur le côté de l'ouverture d'entrée (R3b) par rapport à l'élément d'insertion (350L, 350R) et une zone sur le côté de l'ouverture de sortie (R1a) par rapport à l'élément d'insertion (350L, 350R) à communiquer l'une avec l'autre.
